(19) Europäisches Patentamt
European Patent Office
Office européen des brevets

(11) EP 3 041 881 B1

(12) EUROPÄISCHE PATENTSCHRIFT

(45) Veröffentlichungstag und Bekanntmachung des Hinweises auf die Patenterteilung:
**24.05.2017 Patentblatt 2017/21**

(21) Anmeldenummer: **14761298.0**

(22) Anmeldetag: **25.08.2014**

(51) Int Cl.:
***C08G 64/02*** *(2006.01)*

(86) Internationale Anmeldenummer:
**PCT/EP2014/067993**

(87) Internationale Veröffentlichungsnummer:
**WO 2015/032645 (12.03.2015 Gazette 2015/10)**

# (54) VERNETZUNG VON DOPPELBINDUNGEN ENTHALTENDEN POLYETHERCARBONATPOLYOLEN DURCH ADDITION VON MERCAPTO-VERBINDUNGEN

CROSSLINKING OF POLYETHER CARBONATE POLYOLS CONTAINING DOUBLE BONDS BY THE ADDITION OF MERCAPTANS

RÉTICULATION DE POLYOLS DE POLYÉTHERCARBONATES CONTENANT DES LIAISONS DOUBLES PAR AJOUT DE MERCAPTANS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2013 EP 13183194**

(43) Veröffentlichungstag der Anmeldung:
**13.07.2016 Patentblatt 2016/28**

(73) Patentinhaber: **Covestro Deutschland AG**
**51373 Leverkusen (DE)**

(72) Erfinder:
- **MÜLLER, Thomas Ernst**
  **52074 Aachen (DE)**
- **GÜRTLER, Christoph**
  **50735 Köln (DE)**
- **SUBHANI, Muhammad Afzal**
  **52066 Aachen (DE)**
- **KÖHLER, Burkhard**
  **34289 Zierenberg (DE)**
- **LEITNER, Walter**
  **52074 Aachen (DE)**

(74) Vertreter: **Levpat**
**c/o Covestro AG**
**Gebäude 4825**
**51365 Leverkusen (DE)**

(56) Entgegenhaltungen:
**WO-A1-2012/032028 US-A- 3 280 078**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 041 881 B1

**Beschreibung**

Die vorliegende Erfindung betrifft ein Verfahren zur Herstellung Mercapto-vernetzter Polyethercarbonate, wobei Doppelbindungen enthaltende Polyethercarbonatpolyole mit polyfunktionellen Mercaptanen und/ oder Schwefel unter Einwirkung von Initiatorverbindungen zur Reaktion gebracht werden.

Moderne Kunststoffe sollen neben einer maßgeschneiderten Funktionalität auch verstärkt ökologischen Gesichtspunkten Rechnung tragen. Dies kann, neben einer allgemeinen Optimierung von Herstellprozessen, auch durch den Einsatz von Treibhausgasen, wie Kohlendioxid, als Synthesebausteine zum Aufbau von Polymeren erreicht werden. So lässt sich zum Beispiel über die Fixierung von Kohlendioxid insgesamt eine bessere Prozess-Umweltbilanz erhalten. Dieser Weg wird im Bereich der Herstellung von Polyethercarbonaten beschritten und bildet seit mehr als 40 Jahren Stand intensiver Forschung (z. B. Inoue et al, Copolymerization of Carbon Dioxide and Alkylenoxide with Organometallic Compounds; Die Makromolekulare Chemie 130 (1969) 210-220). In einer möglichen Herstellungsvariante werden dabei Polyethercarbonatpolyole durch eine katalytische Umsetzung von Epoxiden und Kohlendioxid in Anwesenheit H-funktioneller Startersubstanzen ("Starter") erhalten. Eine allgemeine Reaktionsgleichung hierfür ist in Schema (I) gegeben:

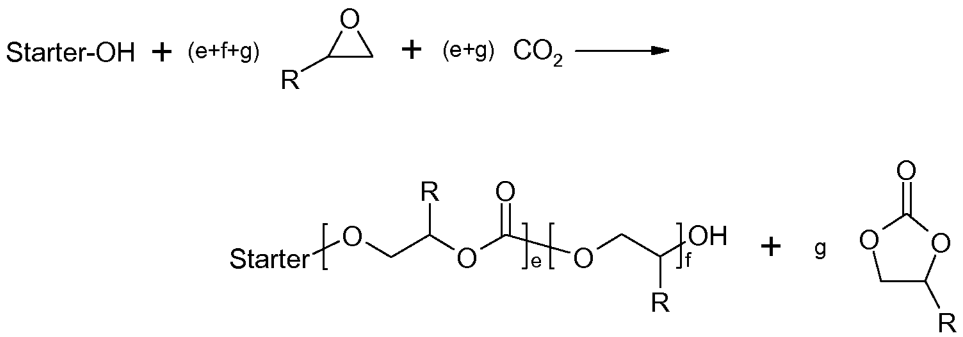

(I)

Als weiteres Produkt, hier ein unerwünschtes Nebenprodukt, entsteht neben dem Polyethercarbonat ein cyclisches Carbonat (beispielsweise für R = $CH_3$ Propylencarbonat).

Polyethercarbonatpolyole weisen, wie oben dargestellt, OH-Funktionalitäten auf, welche prinzipiell im Rahmen weiterer Umsetzungen, zum Beispiel durch die Zugabe von Diiso- oder Polyisocyanaten, die Herstellung höhermolekularer Vernetzungsprodukte ermöglicht. Wünschenswert wäre es jedoch, noch weitere Vernetzungswege mit anderen Vernetzungsreagenzien zu eröffnen, welche andere Reaktionskinetiken und andere Produkteigenschaften bereitstellen können.

In der Journal of Polymer Science Part A: Polymer Chemistry 44-18 (2006) 5329-5336 werden Terpolymere aus Propylenoxid, Allylglycidylether und $CO_2$, die sich durch UV-Strahlung vernetzen lassen, beschrieben. Jedoch ist diese spezielle Art der Härtung für viele Anwendungen zu langsam.

Die Addition von Mercaptoethanol an Polyethercarbonate enthaltend Vinylcyclohexenoxid als Comonomer (thiol-ene-click Chemie) ist in Macromolecules 44 (2011) 9882-9886 beschrieben.

Diese Reaktion wurde genutzt, um Polyethercarbonate lateral mit Hydroxylgruppen zu funktionalisieren. Nicht hingegen beschrieben ist die Aushärtung derart modifizierter Polyethercarbonate.

In US 3,280,078 wird die Vernetzung von ungesättigten Polycarbonaten mit Schwefel offenbart.

Die Verwendung von ungesättigten Polyethercarbonatpolyolen und Ihre Vernetzung wird nicht beschrieben.

WO2012/032028 beschreibt die Herstellung von Polyethercarbonatpolyolen. Die Verwendung von ungesättigten Polyethercarbonatpolyolen und Ihre Vernetzung wird nicht beschrieben.

Es ist daher die Aufgabe dieser Erfindung, schnell härtende Duromere und Beschichtungssysteme aus bei Raumtemperatur flüssigen, polyfunktionellen Polyethercarbonatpolyolen und polyfunktionellen Mercaptanen bereitzustellen, die sich mittels radikalischer Vernetzung erhalten lassen und eine schnelle und einfache Prozessierbarkeit aufweisen.

Erfindungsgemäß gelöst wird die Aufgabe durch ein Verfahren zur Herstellung Mercapto-vernetzter Polyethercarbonate, dadurch gekennzeichnet, dass Doppelbindungen enthaltende Polyethercarbonatpolyole mit polyfunktionellen Mercaptanen und/oder Schwefel unter Einwirkung von Initiatorverbindungen zur Reaktion gebracht werden.

Überraschenderweise wurde gefunden, dass speziell modifizierte Doppelbindungen enthaltende Polyethercarbonatpolyole sich mit polyfunktionellen Mercaptanen schnell und reproduzierbar zu hochmolekularen Polyethercarbonaten umsetzen lassen, welche als duromere Formkörper oder als Schichten gute Verarbeitungs- und Produkteigenschaften aufweisen.

Diese Reaktionsführung zum Erhalt Mercapto-vernetzter Polyethercarbonate, wobei die Polyethercarbonat-Moleküle über schwefelhaltige Brücken verbunden sind, hat sich als besonders vorteilhaft herausgestellt, da die eingesetzten Edukte schon bei niedrigen Temperaturen flüssig und niedrigviskos sind. Derart lässt sich innerhalb kurzer Zeit, ohne großen Energieeintrag eine homogene Reaktionsmischung herstellen, welche sich sehr schnell aushärten lässt. Somit lassen sich innerhalb einer einfachen und kostengünstigen Reaktionsführung dreidimensionale vernetzte Formkörper oder vernetzte dünne Schichten mit gleichbleiben Eigenschaften erhalten.

In den im erfindungsgemäßen Verfahren einsetzbaren Polyethercarbonatpolyolen können die Doppelbindungen in der Hauptkette und/oder in Seitenketten vorliegen.

Sofern nicht anders angezeigt bedeutet der Begriff "Doppelbindung" im Kontext der vorliegenden Erfindung eine C=C-Doppelbindung.

Mittels des oben vorgestellten Verfahrens können Doppelbindungen enthaltende Polyethercarbonatpolyole, welche unterschiedlich elektronenreiche Doppelbindungen tragen, durch polyfunktionelle Mercaptane und/oder Schwefel vernetzt werden. Hierbei lassen sich prinzipiell zwei Möglichkeiten denken, wobei die Elektronendichte des Ethylens als Referenz dient. Elektronenreichere Doppelbindungen weisen eine höhere Elektronendichte und elektronenärmere Doppelbindungen eine geringere Elektronendichte als Ethylen auf. Eine solch unterschiedliche Elektronendichte innerhalb der Doppelbindung lässt sich durch den Einsatz unterschiedlicher Substituenten an, in Nachbarschaft oder in Allylstellung zur Doppelbindung erhalten.

Innerhalb der erfindungsgemäßen Vernetzungsreaktion ist dabei sowohl die Vernetzung von Polyethercarbonatpolyolen, die elektronenreiche und/oder -arme Doppelbindungen entlang derselben Polymerkette tragen, als auch die Vernetzung von Polyethercarbonatpolyol-Gemischen aus Polyethercarbonatpolyolen enthaltend elektronenreiche Doppelbindungen und Polyethercarbonatpolyolen enthaltend elektronenarme Doppelbindungen möglich. Bevorzugt ist die Vernetzung von Polyethercarbonatpolyolen enthaltend elektronenreiche Doppelbindungen.

So kann man beispielweise elektronenarme Doppelbindungen durch den Einsatz von Substituenten mit -M oder -I-Effekt an der Doppelbindung erhalten. Substituenten mit einem -M-Effekt sind in der Lage, Elektronendichte durch mesomere Ladungsdelokalisation aus der Doppelbindung auf den Substituenten zu verteilen. Substituenten mit einem -I-Effekt sind in der Lage, die Elektronendichte in der Doppelbindung durch einen induktiven Effekt zu verringern. Beispiele für solche Substituenten, welche zu elektronenarmen Doppelbindungen führen sind -F, -Cl, -Br, -I,-COH, -COX, -COOX; -C=N, und/oder $-NO_2$, wobei X jeweils für substituiertes oder unsubstituiertes Alkyl oder substituiertes oder unsubstituiertes Aryl stehen kann.

So kann man beispielweise elektronenreiche Doppelbindungen durch den Einsatz von Substituenten mit +M oder +I-Effekt an der Doppelbindung erhalten. Substituenten mit einem +M-Effekt sind in der Lage, Elektronendichte durch mesomere Ladungsdelokalisation aus den Substituenten auf die Doppelbindung zu verteilen. Substituenten mit einem +I-Effekt sind in der Lage, die Elektronendichte in der Doppelbindung durch einen induktiven Effekt zu erhöhen. Geeignete Substituenten sind beispielsweise -OX, -OCOX, -X, $-CH_2X$ und/oder -CH=CHX wobei X substituiertes oder unsubstituiertes Alkyl, substituiertes oder unsubstituiertes Cycloalkyl, substituiertes oder unsubstituiertes Aryl ist. Solche Substituenten können an, in Nachbarschaft oder in Allylstellung zu einer Doppelbindung zu einer Erhöhung der Elektronendichte der Doppelbindung beitragen.

Die erfindungsgemäße radikalische Umsetzung mit polyfunktionellen Mercaptanen kann nur mit Polyethercarbonatpolyolen enthaltend elektronenreiche Doppelbindungen, nur mit Polyethercarbonatpolyolen enthaltend elektronenarme oder mit Polyethercarbonatpolyolen enthaltend sowohl elektronenarme als auch elektronenreiche Doppelbindungen durchgeführt werden. Zudem ist es möglich, Mischungen aus Polyethercarbonatpolyolen enthaltend elektronenreiche Doppelbindungen und Polyethercarbonatpolyolen enthaltend elektronenarme Doppelbindungen einzusetzen. Jedoch sind Polyethercarbonatpolyole oder Gemische von Polyethercarbonatpolyolen bevorzugt, in denen der molare Gehalt an elektronenreichen Doppelbindungen größer dem Gehalt an elektronenarmen Doppelbindungen ist. Besonders bevorzugt sind Polyethercarbonatpolyole, die nur elektronenreiche Doppelbindungen enthalten.

Die ungesättigten Polyethercarbonatpolyole enthalten bevorzugt mindestens zwei Doppelbindungen, vorzugsweise mehr als zwei Doppelbindungen, besonders bevorzugt 4 bis 20 Doppelbindungen pro Molekül.

Polyfunktionelle Mercaptane im Sinne der Erfindung sind organische Verbindungen, welche mindestens zwei S-H Funktionalitäten, vorzugsweise mehr als zwei Thiolgruppen, besonders bevorzugt 3 bis 4 Thiolgruppen pro Vernetzermolekül enthalten. Ganz besonders bevorzugt sind Ester der 3-Mercaptopropionsäure oder der 2-Mercaptoessigsäure mit polyfunktionellen Alkoholen, wie Ethylenglykol, Propylenglykol, Diethylenglykol, Dipropylenglykol, Butandiol, Neopentylglykol, Hexandiol, Glycerin, Di-Glycerin, Triglycerin, Trimethylolethan, Trimethylolpropan, Di-Trimethylolpropan, Di-Trimethylolethan, Pentaerythrit, Dipentaerythrit oder Sorbit oder den Ethoxylierungs- oder Propoxylierungsprodukten dieser Polyole, vorzugsweise Trimethylolpropan oder Pentaerythrit. Auch Oligomerisate des 3-Mercaptopropyltrimethoxysilans, 3-Mercaptopropyltriethoxysilans, 3-Mercaptopropylmethyldimethoxysilans oder 3-Mercaptopropylmethyldiethoxysilans sind als polyfunktionelle Mercaptane geeignet. Andere geeignete Dimercaptane sind Dimercaptoalkane, wie 1,2-Dimercaptoethan, 1,6-Dimercaptohexan oder 1,12-Dimercaptododecan. Andere geeignete Dimercaptane sind Dimercaptoaromaten, wie 1,3-Dimercaptobenzol, 1,4-Dimercaptobenzol oder 4,4'-Dimercaptodiphenylether. Auch Mercaptoheterocyclen, wie 2,5-Dimercaptothiadiazol oder 2,4,6-Trimercapto-1,3,5-triazin sind als polyfunktionelle Mercaptane geeignet. Die maximale Anzahl der Mercaptogruppen innerhalb der polyfunktionelle Mercaptane ist prinzipiell

nicht begrenzt, beträgt aber zweckmäßigerweise weniger als 20, bevorzugt weniger als 12 und des Weiteren bevorzugt weniger als 8. Diese maximale Anzahl an Mercatogruppen pro Mercaptan kann innerhalb des erfindungsgemäßen Verfahrens zu einer hinreichend Vernetzungsdichte mit einer ausreichenden Flexibilität des vernetzten Produktes führen.

Initiatorverbindungen im Sinne der Erfindung sind organische oder metallorganische Verbindungen, welche Bindungen ausweisen, welche als Funktion eines äußeres Triggers, wie zum Beispiel Temperatureinwirkung oder Bestrahlung mit Licht, in Radikale zerfallen.

In einer alternativen Ausführungsform wird das Doppelbindungen enthaltende Polyethercarbonat mit elementarem Schwefel und/oder schwefelspendenden Stoffen (im Sinne der vorliegenden Erfindung auch als "Schwefel" anzusehen) wie beispielsweise Dischwefeldichlorid ($S_2Cl_2$) vernetzt. In diesem Fall werden als Initiatorverbindung Vulkanisier-Katalysatoren, wie beispielsweise 2-Mercaptobenzothiazol oder Tetramethylthiuramdisulfid eingesetzt.

Die vorliegende Erfindung wird in Verbindung mit weiteren Aspekten und Ausführungsformen nachfolgend näher beschrieben. Sie können beliebig miteinander kombiniert werden, sofern sich aus dem Zusammenhang nicht eindeutig das Gegenteil ergibt.

In einer Ausgestaltung des Verfahrens kann die Herstellung der Doppelbindungen enthaltenden Polyethercarbonatpolyole die Schritte:

(α) Vorlegen eines Katalysators und:

(αα) eines Suspensionsmittels, das keine H-funktionellen Gruppen enthält und/oder
(αβ) einer H-funktionellen Starterverbindung,

(γ) Zudosieren von Kohlendioxid und

- mindestens zweier Epoxide, wobei mindestens eines der beiden Epoxide eine Doppelbindung aufweist oder
- eines Epoxides und eines ungesättigten cyclischen Anhydrids,

umfassen.

Es ist hierbei bevorzugt, dass dieses Verfahren weiterhin den Schritt (β) zwischen Schritt (α) und Schritt (γ) umfasst:

(β) Zudosieren mindestens eines Epoxides, wobei das oder die in Schritt (γ) zudosierten Epoxide von dem im Schritt (β) zudosierten Epoxid oder zudosierten Epoxiden gleich oder verschieden sein können.

Weiterhin ist es bevorzugt, dass der Katalysator ein DMC-Katalysator ist.

Überraschenderweise wurde gefunden, dass durch die Wahl geeigneter ungesättigter Verbindungen in der Synthese des Doppelbindungen enthaltenden Polyethercarbonatpolyols Polymere erhalten werden können, welche im Vergleich zum Stand der Technik besonders günstige Eigenschaften aufweisen. Die Doppelbindungen enthaltenden Polyethercarbonatpolyole lassen sich reproduzierbar in hoher Ausbeute erhalten und zeigen durch die gewählte Verfahrensführung eine enge Molekularmassenverteilung und nur einen sehr geringen Anteil an nicht reagierten Monomeren. Durch Einbau cyclischer Anhydride in die gebildete Polymerkette kann das gebildete Polyethercarbonatpolyol neben Ether- und Carbonatgruppen zusätzlich Estergruppen enthalten. Zudem lassen sich die durch dieses Verfahren erhältlichen Doppelbindungen enthaltenden Polyethercarbonatpolyole besonders vorteilhaft radikalisch mit Mercaptanen vernetzen und führen so zu Mercapto-vernetzten Polyethercarbonaten mit guten Gebrauchseigenschaften und einfacher Prozessführung. Ohne durch die Theorie gebunden zu sein, ergibt sich diese einfache Prozessführung im Rahmen der Vernetzung durch die Reaktivität der Doppelbindungen des Polyethercarbonatpolyols mit den Mercaptanen.

Des Weiteren kann innerhalb einer bevorzugten Ausführungsform des Verfahrens zur Herstellung der Doppelbindungen enthaltenden Polyethercarbonatpolyole die Temperatur im Schritt (γ) größer oder gleich 60°C und kleiner oder gleich 150°C betragen. Dieser Temperaturbereich während der Polymerisation hat sich als besonders geeignet erwiesen, um mit einer hinreichenden Reaktionsgeschwindigkeit und mit einer hohen Selektivität, die Doppelbindungen enthaltenden Polyethercarbonatpolyole zu synthetisieren. Im Bereich niedrigerer Temperaturen kann sich eine nur ungenügende Reaktionsgeschwindigkeit einstellen und bei höheren Temperaturen kann der Anteil an unerwünschten Nebenprodukten zu stark ansteigen.

In dem erfindungsgemäßen einsetzbaren Verfahren können als Monomere ohne ungesättigte Gruppen Epoxide mit 2-45 Kohlenstoffatomen eingesetzt werden, die keine Doppelbindung tragen. Bei den Epoxiden mit 2 - 45 Kohlenstoffatomen handelt es sich beispielsweise um eine oder mehrere Verbindungen ausgewählt aus der Gruppe umfassend Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Epoxide von C6-C22 α-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether. Vorzugsweise können als Epoxide Ethylenoxid und/oder Propylenoxid, insbesondere Propylenoxid eingesetzt werden.

Für die Herstellung der erfindungsgemäß einsetzbaren Doppelbindungen enthaltenden Polyethercarbonatpolyole wird weiterhin eine H-funktionelle Starterverbindung eingesetzt.

Die Suspensionsmittel, die in Schritt (α) zum Suspendieren des DMC-Katalysators eingesetzt werden, enthalten keine H-funktionellen Gruppen.

Als Suspensionsmittel sind alle polar-aprotischen, schwach polar-aprotischen und unpolaraprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat bezeichnet), 1,3-Dioxolan-2-on, Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

In einer alternativen Ausführungsform werden als Suspensionsmittel, die in Schritt (α) zum Suspendieren des DMC-Katalysators eingesetzt werden, eine oder mehrere Verbindung(en) ausgewählt aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden. Ohne an eine Theorie gebunden zu sein, werden solche Suspensionsmittel im späteren Verlauf der Polymerisationsverlauf in Gegenwart eines Starters in die Polymerkette eingebaut. Dadurch entfallen nachgelagerte Reinigungsschritte.

Aliphatische oder aromatische Lactone sind cyclische Verbindungen enthaltend eine Esterbindung im Ring. Bevorzugte Verbindungen sind 4-gliedrige Ringlactone wie β-Propiolacton, β-Butyrolacton, β-Isovalerolacton, β-Caprolacton, β-Isocaprolacton, β-Methyl-β-valerolacton, 5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-SH-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on, und höhergliedrige Ringlactone, wie (7E)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens zur Copolymerisation von Epoxiden und $CO_2$ nicht oder nur zu einem geringen Anteil in die Polymerkette eingebaut.

Cyclische Carbonate mit weniger als drei gegebenenfalls substituierten Methylengruppen zwischen den Sauerstoffatomen der Carbonatgruppe können jedoch gemeinsam mit anderen Suspensionsmitteln eingesetzt werden. Bevorzugte cyclische Carbonate mit weniger als drei gegebenenfalls substituierten Methylengruppen zwischen den Sauerstoffatomen der Carbonatgruppe sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat.

Cyclische Anhydride sind cyclische Verbindungen enthaltend eine Anhydridgruppe im Ring eingesetzt. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Als Katalysator für die Herstellung der erfindungsgemäßen Polyethercarbonatpolyole mit Doppelbindungen wird bevorzugt ein DMC-Katalysator (Doppel-Metall-cyanid-Katalysator) eingesetzt. Es können zusätzlich oder als alleinige Katalysatoren auch andere Katalysatoren für die Copolymerisation von Alkylenoxiden und $CO_2$ aktiven Katalysatoren, wie beispielsweise Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und $CO_2$ gibt zum Beispiel Chemical Communications 47 (2011) 141-163.

Die in dem erfindungsgemäßen Verfahren einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Der Begriff Terpolymerisation im Sinne der Erfindung beinhaltet die Polymerisation von mindestens einem Epoxid, mindestens einem Comonomeren mit einer Doppelbindung (Epoxid und/oder cyclisches Anhydrid) und $CO_2$. Terpolymerisation im Sinne der Erfindung schließt insbesondere auch die Copolymerisation von gesamt mehr als drei Monomeren mit ein.

Eine bevorzugte Ausführungsform des erfindungsgemäß einsetzbaren Verfahrens zur Herstellung von Doppelbindungen enthaltenden Polyethercarbonatpolyolen ist dadurch gekennzeichnet, dass

(α) [erste Aktivierungsstufe] ein Suspensionsmittel, das keine H-funktionellen Gruppen enthält, eine H-funktionelle Starterverbindung, ein Gemisch aus einem Suspensionsmittel, das keine H-funktionellen Gruppen enthält und einer H-funktionellen Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden, wobei der DMC-Katalysator dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen vor oder nach der ersten Aktivierungsstufe zugesetzt wird,

(β) [zweite Aktivierungsstufe] eine Teilmenge (bezogen auf die Gesamtmenge der in den Schritten (β) und (γ) eingesetzten Menge an Epoxiden) von einem oder mehreren Epoxiden zu der aus Schritt (α) resultierenden Mischung zugesetzt wird, wobei die Zugabe einer Teilmenge an Epoxid gegebenenfalls in Gegenwart von $CO_2$ und/oder Inertgas (wie beispielsweise Stickstoff oder Argon) erfolgen kann, und wobei der Schritt (β) auch mehrfach erfolgen kann,

(γ) [Polymerisationsstufe] ein oder mehrere Epoxiden, mindestens einer ungesättigter Verbindung (Epoxid und/oder cyclisches Anhydrid) und Kohlendioxid zu der aus Schritt (β) resultierenden Mischung fortwährend zudosiert werden, wobei die für die Terpolymerisation eingesetzten Epoxide gleich oder von den bei Schritt (β) eingesetzten Epoxiden verschieden sein können.

<u>Zu Schritt (α):</u>

Die Zugabe der einzelnen Komponenten in Schritt (α) kann gleichzeitig oder nacheinander in beliebiger Reihenfolge erfolgen; bevorzugt wird in Schritt (α) zunächst der DMC-Katalysator vorgelegt und gleichzeitig oder anschließend das Suspensionsmittel, das keine H-funktionellen Gruppen enthält, die H-funktionelle Starterverbindung, das Gemisch aus einem Suspensionsmittel, das keine H-funktionellen Gruppen enthält und der H-funktionellen Starterverbindung oder das Gemisch aus mindestens zwei H-funktionellen Starterverbindungen zugesetzt.

Gegenstand einer bevorzugten Ausführungsform ist ein Verfahren, wobei in Schritt (α) [erste Aktivierungsstufe]

(α1) in einem Reaktor der DMC-Katalysator und ein Suspensionsmittel und/oder eine oder mehrere H-funktionelle Starterverbindungen vorgelegt werden,

(α2) durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird.

Gegenstand einer weiteren bevorzugten Ausführungsform ist ein Verfahren, wobei in Schritt (α) [erste Aktivierungsstufe]

(α1) ein Suspensionsmittel, das keine H-funktionellen Gruppen enthält, eine H-funktionelle Starterverbindung, ein Gemisch aus einem Suspensionsmittel, das keine H-funktionellen Gruppen enthält und einer H-funktionellen Starterverbindung oder ein Gemisch aus mindestens zwei H-funktionellen Starterverbindungen, gegebenenfalls unter Inertgasatmosphäre, unter einer Atmosphäre aus Inertgas-Kohlendioxid-Gemisch oder unter einer reinen Kohlendioxid-Atmosphäre, besonders bevorzugt unter Inertgasatmosphäre vorgelegt wird und

(α2) in das resultierende Gemisch aus DMC-Katalysator und dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen bei einer Temperatur von 50 bis 200°C, bevorzugt von 80 bis 160°C, besonders bevorzugt von 125 bis 135°C ein Inertgas, ein Inertgas-Kohlendioxid-Gemisch oder Kohlendioxid, besonders bevorzugt Inertgas eingeleitet und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird,

wobei der Doppelmetallcyanid-Katalysator zu dem Suspensionsmittel, das keine H-funktionellen Gruppen enthält, der H-funktionellen Starterverbindung, dem Gemisch aus einem Suspensionsmittel, das keine H-funktionellen Gruppen enthält und der H-funktionellen Starterverbindung oder dem Gemisch aus mindestens zwei H-funktionellen Starterverbindungen in Schritt (α1) oder unmittelbar anschließend in Schritt (α2) zugesetzt werden kann.

Der DMC-Katalysator kann in fester Form oder in einem Suspensionsmittel und/oder einer H-funktionellen Starterverbindung suspendiert zugegeben werden. Wird der DMC-Katalysator als Suspension zugegeben, wird diese bevorzugt in Schritt (α1) dem Suspensionsmittel und/oder der einen oder mehreren H-funktionellen Starterverbindungen zugefügt.

<u>Zu Schritt (β):</u>

Der Schritt (β) der zweiten Aktivierungsstufe kann in Gegenwart von $CO_2$ und/oder Inertgas erfolgen. Bevorzugt erfolgt Schritt (β) unter einer Atmosphäre aus einem Inertgas-Kohlendioxid-Gemisch (beispielsweise Stickstoff-Kohlendioxid oder Argon-Kohlendioxid) oder einer Kohlendioxid-Atmosphäre, besonders bevorzugt unter Kohlendioxid-Atmosphäre. Das Einstellen einer Inertgas-Kohlendioxid-Atmosphäre oder einer Kohlendioxid-Atmosphäre und die Dosierung eines oder mehrerer Epoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 50 bar und besonders bevorzugt 500 mbar bis 50 bar beträgt. Der Start der Dosierung des Epoxids kann bei einem beliebig zuvor gewählten Vordruck erfolgen. Als Gesamtdruck (absolut) der Atmosphäre wird in Schritt (β) vorzugsweise im Bereich von 10 mbar bis 100 bar, vorzugsweise 100 mbar bis 50 bar und weiterhin bevorzugt 500 mbar bis 50 bar eingestellt. Gegebenenfalls wird während oder nach der Dosierung des Epoxids der Druck durch Einleiten weiteren Kohlendioxids nachgeregelt, wobei der Druck (absolut) 10 mbar bis 100 bar, vorzugsweise 100 mbar bis 50 bar und bevorzugt 500 mbar bis 50 bar beträgt.

In einer bevorzugten Ausführungsform beträgt die bei der Aktivierung in Schritt (β) eingesetzte Menge an einem oder mehreren Epoxiden 0,1 bis 25,0 Gew.-%, bevorzugt 1,0 bis 20,0 Gew.-%, besonders bevorzugt 2,0 bis 16,0 Gew.-%, bezogen auf die im Schritt (α) eingesetzte Menge an Suspensionsmittel und/oder H-funktioneller Starterverbindung.

Das Epoxid kann in einem Schritt oder schrittweise in mehreren Teilmengen zugegeben werden.

In einer besonders bevorzugten Ausführungsform der Erfindung wird bei der Aktivierung in Schritt (β) [zweite Aktivierungsstufe] eine Teilmenge (bezogen auf die Gesamtmenge der in den Schritten (β) und (γ) eingesetzten Menge an Epoxiden) von einem oder mehreren Epoxiden zu der aus Schritt (α) resultierenden Mischung zugesetzt, wobei die Zugabe einer Teilmenge an Epoxid gegebenenfalls in Gegenwart von $CO_2$ und/oder Inertgas erfolgen kann. Der Schritt (β) kann auch mehrfach erfolgen. Der DMC-Katalysator wird vorzugsweise in einer Menge eingesetzt, so dass der Gehalt an DMC-Katalysator im resultierenden Doppelbindungen enthaltenden Polyethercarbonatpolyol 10 bis 10000 ppm, besonders bevorzugt 20 bis 5000 ppm und höchst bevorzugt 50 bis 500 ppm beträgt.

Im zweiten Aktivierungsschritt kann das Epoxid beispielsweise in einer Portion oder innerhalb von 1 bis 15 Minuten, vorzugsweise 5 bis 10 Minuten zugegeben. Die Dauer des zweiten Aktivierungsschritts beträgt bevorzugt 15 bis 240 Minuten, besonders bevorzugt 20 bis 60 Minuten.

<u>Zu Schritt (γ):</u>

Die Dosierung des oder der Epoxide, der ungesättigten Verbindungen, im Folgenden auch als Monomere bezeichnet, und des Kohlendioxids kann simultan, wechselweise oder sequentiell erfolgen, wobei die gesamte Kohlendioxidmenge auf einmal oder über die Reaktionszeit dosiert zugegeben werden kann. Es ist möglich, während der Zugabe der Monomere den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung der Monomere kann simultan, wechselweise oder sequentiell zur Kohlendioxid-Dosierung erfolgen. Es ist möglich, die Monomere mit einer konstanten Dosierrate zu dosieren oder die Dosierrate kontinuierlich oder schrittweise zu steigern oder zu senken oder die Monomere portionsweise zuzugeben. Bevorzugt werden die Monomere mit konstanter Dosierrate dem Reaktionsgemisch zugegeben. Werden mehrere Epoxide zur Synthese der Doppelbindungen enthaltenden Polyethercarbonatpolyole eingesetzt, so können die Epoxide einzeln oder als Gemisch zudosiert werden. Die Dosierung der Epoxide kann simultan, wechselweise oder sequentiell über jeweils separate Dosierungen (Zugaben) erfolgen oder über eine oder mehrere Dosierungen, wobei die Epoxide einzeln oder als Gemisch dosiert werden können. Über die Art und/oder Reihenfolge der Dosierung der Monomere und/oder des Kohlendioxids ist es möglich, statistische, alternierende, blockartige oder gradientenartige Doppelbindungen enthaltende Polyethercarbonatpolyole zu synthetisieren.

Vorzugsweise wird ein Überschuss an Kohlendioxid bezogen auf die berechnete Menge an benötigtem Kohlendioxid im Doppelbindungen enthaltenden Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Doppelbindungen enthaltenden Polyethercarbonatpolyole als vorteilhaft erwiesen. Es ist möglich, das Kohlendioxid dem Reaktionsbehälter kontinuierlich oder diskontinuierlich zuzuführen. Dies hängt davon ab, wie schnell die Monomere und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Konzentration des Kohlendioxids kann bei der Zugabe der Monomere ebenso variieren. Je nach gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

In Schritt (γ) kann das Kohlendioxid beispielsweise in die Mischung eingeleitet werden durch

(i) Begasung des Reaktionsgemisches im Reaktor von unten,
(ii) Verwendung eines Hohlwellenrührers,
(iii) eine Kombination aus den Dosierungen gemäß (i) und (ii), und/oder
(iv) Begasung über die Flüssigkeitsoberfläche durch Einsatz mehrstufiger ausgeführter Rührorgane.

Schritt (γ) wird beispielsweise bei Temperaturen von 60 bis 150°C, vorzugsweise von 80 bis 120°C, ganz besonders bevorzugt von 90 bis 110°C durchgeführt. Werden Temperaturen unterhalb von 60°C eingestellt, kommt die Reaktion zum Erliegen. Bei Temperaturen oberhalb von 150°C steigt die Menge an unerwünschten Nebenprodukten stark an.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Der Hohlwellenrührer gemäß (ii) ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen)

entsteht an dem mit der Hohlwelle verbundenen Ende des Rührflügels ein Unterdruck derart, dass die Gasphase (enthaltend $CO_2$ und ggf. unverbrauchte Monomere) aus dem über der Reaktionsmischung befindlichen Gasraum abgesaugt und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen und/oder mit einer Absaugung des Gases aus dem Gasraum über der Reaktionsmischung und anschließender Rekompression des Gases kombiniert werden. Beispielsweise wird das aus dem Gasraum über der Reaktionsmischung abgesaugte und komprimierte Gas, gegebenenfalls gemischt mit frischem Kohlendioxid und/oder Monomeren, wieder in das Reaktionsgemisches gemäß (i), (ii), (iii) und/oder (iv) eingeleitet.

Bevorzugt wird der Druckabfall, welcher über Einbau des Kohlendioxids, der Monomere bei der Terpolymerisation in das Reaktionsprodukt entsteht, über frisch zudosiertes Kohlendioxid ausgeglichen.

Die Einleitung der Monomere kann separat oder zusammen mit dem $CO_2$ sowohl über die Flüssigkeitsoberfläche oder direkt in die flüssige Phase erfolgen. Bevorzugt erfolgt die Einleitung der Monomere direkt in die flüssige Phase, da dies den Vorteil hat, dass eine rasche Durchmischung der eingebrachten Monomere mit der flüssigen Phase erfolgt und so lokale Konzentrationsspitzen der Monomere vermieden werden. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.

Die drei Schritte (α), (β) und (γ) können in demselben Reaktor oder jeweils separat in unterschiedlichen Reaktoren durchgeführt werden. Besonders bevorzugte Reaktortypen sind Rührkessel, Rohrreaktor und Schlaufenreaktor. Werden die Reaktionsschritte (α), (β) und (γ) in unterschiedlichen Reaktoren durchgeführt, kann für jeden Schritt ein unterschiedlicher Reaktortyp verwenden werden.

Doppelbindungen enthaltende Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit der Monomere zu achten. Sie ist so einzustellen, dass trotz der inhibierenden Wirkung des Kohlendioxids die Monomere genügend schnell abreagieren. Die Konzentration an freien Monomeren in der Reaktionsmischung während der zweiten Aktivierungsstufe (Schritt β) beträgt vorzugsweise > 0 bis 100 Gew.-%, besonders bevorzugt > 0 bis 50 Gew.-%, höchst bevorzugt > 0 bis 20 Gew.-% (jeweils bezogen auf das Gewicht der Reaktionsmischung). Die Konzentration an freien Monomeren in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

Eine weitere mögliche Ausführungsform für die Copolymerisation (Schritt γ) ist dadurch gekennzeichnet, dass auch eine oder mehrere H-funktionelle Starterverbindungen während der Reaktion kontinuierlich in den Reaktor zudosiert werden. Bei einer Durchführung des Verfahrens im semi-batch Betrieb beträgt die Menge der H-funktionellen Starterverbindungen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 99,99 mol% Äquivalente (jeweils bezogen auf die gesamte Menge an H-funktionellen Starterverbindungen).

In einer bevorzugten Ausführungsform wird die gemäß den Schritten (α) und (β) aktivierte Katalysator-Starter-Mischung in demselben Reaktor weiter mit den Monomeren und Kohlendioxid umgesetzt. In einer weiteren bevorzugten Ausführungsform wird die gemäß den Schritten (α) und (β) aktivierte Katalysator-Starter-Mischung in einem anderen Reaktionsbehältnis (beispielsweise einem Rührkessel, Rohrreaktor oder Schlaufenreaktor) weiter mit den Monomeren und Kohlendioxid umgesetzt. In einer weiteren bevorzugten Ausführungsform wird die gemäß dem Schritt (α) vorbereitete Katalysator-Starter-Mischung in einem anderen Reaktionsbehältnis (beispielsweise einem Rührkessel, Rohrreaktor oder Schlaufenreaktor) gemäß den Schritten (β) und (γ) mit den Monomeren und Kohlendioxid umgesetzt.

Bei Reaktionsführung in einem Rohrreaktor werden die gemäß Schritt (α) vorbereitete Katalysator-Starter-Mischung oder die gemäß der Schritte (α) und (β) aktivierte Katalysator-Starter-Mischung und gegebenenfalls weitere Starter sowie die Monomeren und Kohlendioxid kontinuierlich durch ein Rohr gepumpt. Bei Verwendung einer gemäß Schritt (α) vorbereiteten Katalysator-Starter-Mischung erfolgt die zweite Aktivierungsstufe gemäß Schritt (β) im ersten Teil des Rohrreaktors und die Terpolymerisation gemäß Schritt (γ) im zweiten Teil des Rohrreaktors. Die molaren Verhältnisse der Reaktionspartner variieren je nach gewünschtem Polymer.

In einer Verfahrensvarianten wird Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang des Reaktors angeordnet sind, in dem Reaktor eingebracht werden. Eine Teilmenge der Monomere kann am Eingang des Reaktors eingebracht werden. Die Restmenge der Monomere wird bevorzugt über

mehrere Dosierstellen, die entlang des Reaktors angeordnet sind, in den Reaktor eingebracht.

Vorteilhafterweise werden Mischelemente, wie sie zum Beispiel von der Firma Ehrfeld Mikrotechnik BTS GmbH vertrieben werden, zur besseren Durchmischung der Reaktionspartner eingebaut oder Mischer-Wärmetauscherelemente, die gleichzeitig die Durchmischung und Wärmeabfuhr verbessern. Bevorzugt wird durch die Mischelemente zudosiertes $CO_2$ und die Monomere mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung von Doppelbindungen enthaltenden Polyethercarbonatpolyolen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

Um einen vollständigen Umsatz zu realisieren, kann dem Reaktionsapparat, in dem der Schritt ($\gamma$) durchgeführt wird, häufig ein weiterer Kessel oder ein Rohr ("Verweilrohr") nachgeschaltet sein, in dem nach der Reaktion vorhandene Restkonzentrationen freier Monomere abreagieren. Bevorzugt liegt der Druck in diesem nachgeschalteten Reaktor bei demselben Druck wie in dem Reaktionsapparat, in dem der Reaktionsschritt ($\gamma$) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt ($\gamma$) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und besonders bevorzugt bei 20 bis 100°C. Das Reaktionsgemisch enthält am Ende der Nachreaktionszeit bzw. am Ausgang des nachgeschalteten Reaktors vorzugsweise weniger als 0,05 Gew.-% an Monomeren. Die Nachreaktionszeit bzw. die Verweilzeit im nachgeschalteten Reaktor beträgt bevorzugt 10 min bis 24 h, besonders bevorzugt 10 min bis 3 h.

Die erfindungsgemäß erhältlichen Doppelbindungen enthaltenden Polyethercarbonatpolyole haben vorzugsweise eine OH-Funktionalität (d.h. durchschnittliche Anzahl von OH-Gruppen pro Molekül) von mindestens 0,8, bevorzugt von 1 bis 8, besonders bevorzugt von 1 bis 6 und ganz besonders bevorzugt von 2 bis 4. In einer alternativen Ausführungsform werden die OH-Gruppen vor der Vernetzung der Polyethercarbonatpolyole zu vernetzten Polyethercarbonaten mit geeigneten Reagenzien abgesättigt, so dass das entstehende abgesättigte Polyethercarbonatpolyol eine OH-Funktionalität kleiner als 0,8, bevorzugt kleiner als 0,5 und besonders bevorzugt kleiner als 0,1 aufweist. Dies führt bei speziellen Anwendungen zu einer niedrigeren Polarität der nach Vernetzung erhaltenen vernetzten Polyethercarbonate, wodurch beispielsweise die Wasseraufnahme der Materialien herabgesetzt wird. Geeignete Reagenzien für die Absättigung der OH-Funktionalitäten sind beispielsweise Methylierungsmittel.

Das Molekulargewicht der erhaltenen Doppelbindungen enthaltenden Polyethercarbonatpolyole beträgt bevorzugt mindestens 400, besonders bevorzugt 400 bis 1000000 g/mol und höchst bevorzugt 500 bis 60000 g/mol. In einer alternativen Ausführungsform wird das Molekulargewicht des Polyethercarbonatpolyols vor der Vernetzung durch Verlängerung mit geeigneten Reagenzien erhöht. So ist es beispielsweise möglich, ein bifunktionelles Polyethercarbonatpolyol mit einem mittleren Molekulargewicht von $\geq$ 1’000 bis $\leq$ 20’000 herzustellen und dieses anschließend auf ein mittleres Molekulargewicht von $\geq$ 10’000 bis $\leq$ 5’000’000 zu verlängern. Bevorzugt haben verlängerte Polyethercarbonatpolyol ein Molekulargewicht von $\geq$ 100’000 bis $\leq$ 50’000’000 und besonders bevorzugt von $\geq$ 500’000 bis $\leq$ 5’000’000. Geeignete Reagenzien für die Verlängerung der Polyethercarbonatpolyole sind beispielsweise Diisocyanate wie Hexamethylendiisocyanat (HDI), Methylendiphenyldiisocyanat (MDI) oder Toluendiisocyanat (TDI).

Als geeignete H-funktionelle Starterverbindungen (Starter) können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz können beispielsweise eine oder mehrere Verbindungen ausgewählt werden aus der Gruppe umfassend ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-*tert*-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht $M_n$ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht $M_n$ im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit $M_n$ = 150 bis 2000 g/mol zur Herstellung der Polyesteretherpolyole eingesetzt.

Des Weiteren können als H-funktionelle Startersubstanzen Polycarbonatdiole eingesetzt werden, insbesondere solche mit einem Molekulargewicht $M_n$ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der Bayer MaterialScience AG verwendet werden, wie z.B. Desmophen® C 1100 oder Desmophen® C 2200.

In einer weiteren Ausführungsform der Erfindung können Polyethercarbonatpolyole und/oder Polyetherestercarbonatpolyole als H-funktionelle Startersubstanzen eingesetzt werden. Insbesondere können Polyetherestercarbonatpolyole eingesetzt werden. Diese als H-funktionelle Startersubstanzen eingesetzten Polyetherestercarbonatpolyole können hierzu in einem separaten Reaktionsschritt zuvor hergestellt werden.

Die H-funktionellen Startersubstanzen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole mit einer Zusammensetzung nach der allgemeinen Formel,

$$HO\text{-}(CH_2)_X\text{-}OH \qquad (II)$$

wobei x eine Zahl von 1 bis 20, bevorzugt eine ganze Zahl von 2 bis 20 ist. Beispiele für Alkohole gemäß Formel (II) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht $M_n$ im Bereich von 62 bis 4500 g/mol und insbesondere ein Molekulargewicht $M_n$ im Bereich von 62 bis 3000 g/mol.

Doppelmetallcyanid (DMC)-Katalysatoren zur Verwendung in der Homopolymerisation von Epoxiden sind im Prinzip aus dem Stand der Technik bekannt (siehe z.B. US-A 3404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonaten bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittleren Molekulargewicht größer als 500 g/mol enthalten.

Die erfindungsgemäß einsetzbaren DMC-Katalysatoren werden vorzugsweise erhalten, indem man

(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (a) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (III) auf,

$$M(X)_n \qquad (III),$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M

$Zu^{2+}$, $Fe^{2+}$, $Co^{2+}$ oder $Ni^{2+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (IV) auf,

$$M_r(X)3 \qquad (IV),$$

wobei

M ausgewählt ist aus den Metallkationen $Fe^{3+}$, $Al^{3+}$, $Co^{3+}$ und $Cr^{3+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (V) auf,

$$M(X)_s \qquad (V),$$

wobei

M ausgewählt ist aus den Metallkationen $Mo^{4+}$, $V^{4+}$ und $W^{4+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (VI) auf,

$$M(X)_t \qquad (VI),$$

wobei

M ausgewählt ist aus den Metallkationen $Mo^{6+}$ und $W^{6+}$,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (VII) auf

$$(Y)a\ M'(CN)_b\ (A)_c \qquad (VII),$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VIII)

$$M_x[M'_{x'},(CN)_y]_z \qquad \text{(VIII)},$$

worin M wie in den Formeln (III) bis (VI) und
M' wie in Formel (VII) definiert ist, und
x, x', y und z ganzzahlig sind und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanokobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz

zu Metallcyanidsalz von 2,25 zu 1,00. Das Metallcyanidsalz (z.B. Kaliumhexacyanokobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Die ungesättigten Comonomere können statistisch oder blockweise in den Doppelbindungen enthaltenden Polyethercarbonatpolyolen verteilt sein. Auch Gradientenpolymere sind einsetzbar.

In einer weiteren Ausgestaltung des Verfahren können die in Schritt (γ) zudosierten ungesättigten, cyclischen Anhydride aus der Gruppe umfassend 4-Cyclohexen-1,2-disäureanhydrid, 4-Methyl-4-cyclohexen-1,2-disäureanhydrid, 5,6-Norbornen-2,3-disäureanhydrid, Allyl-5,6-norbornen-2,3-disäureanhydrid, Dodecenylbernsteinsäureanhydrid, Tetradecenylbernsteinsäureanhydrid, Hexadecenyl-bernsteinsäureanhydrid oder Octadecenylbernsteinsäureanhydrid ausgewählt sein. Diese Gruppe ungesättigter cyclischer Anhydride trägt elektronenreiche, ungesättigte Doppelbindungen, welche zu einer Umsetzung im Rahmen der initiatoraktivierten Vernetzungsreaktion mit Mercaptanen beitragen können. Auf diese Art und Wiese können sich durch die Vernetzungsreaktion mit polyfunktionellen Mercaptanen innerhalb kurzer Zeit homogene Filme und Formkörper bereitstellen lassen.

Weiterhin können die in Schritt (γ) zudosierten ungesättigten cyclischen Anhydride folgenden Formeln (IX), (X) und (XI) entsprechen:

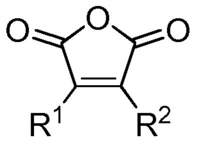

(IX)

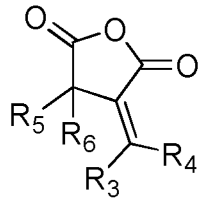

(X)

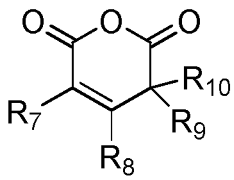

,

(XI)

wobei $R^1$ - $R^{10}$ unabhängig voneinander für Wasserstoff, Halogen, C1-C22-Alkyl- oder C6-C14 Arylreste stehen. In einer weiteren Ausgestaltung kann $R^1$ - $R^2$ nur für Wasserstoff und $R^3$ - $R^{10}$ für Wasserstoff, C1-C22-Alkyl oder C6-C14 Arylreste stehen. Bevorzugte Verbindungen der Formel (IX), (X) (XI) sind Maleinsäureanhydrid, Halogen- oder Alkyl-substituierte Maleinsäureanhydride und Itaconsäureanhydrid. Besonders bevorzugt können Maleinsäureanhydrid und Itaconsäureanhydrid eingesetzt werden. Diese Gruppe ungesättigter cyclischer Anhydride trägt elektronenarme, ungesättigte Doppelbindungen, die weniger günstig sind. Sie können aber allein oder gemeinsam mit elektronenreichen, ungesättigten Doppelbindungen mit Mercaptanen umgesetzt werden.

In einer weiteren Charakteristik des Verfahrens können die in Schritt ($\gamma$) zudosierten Epoxide mit Doppelbindung aus der Gruppe umfassend Allylglycidylether, Vinylcyclohexenoxid, Cyclooctadienmonoepoxid, Cyclododecatrienmonoepoxid, Butadienmonoepoxid, Isoprenmonoepoxid und/oder Limonenoxid ausgewählt sein. Dieser Gruppe an Epoxiden ist gemein, dass sie elektronenreiche Doppelbindungen tragen, welches zu Polyethercarbonatpolyolen enthaltend elektronenreiche Doppelbindungen führt. Dies bedingt durch die +M oder +I Substituenten benachbart oder in Allylstellung zur Doppelbindung der eingesetzten Epoxide. Die Erhöhung der Elektronendichte in den Doppelbindungen des Polymers kann zu einer schnelleren Umsetzung im Rahmen der initiatoraktivierten Vernetzungsreaktion mit Mercaptanen beitragen. Auf diese Art und Weise können sich durch die Vernetzungsreaktion mit polyfunktionellen Mercaptanen innerhalb kurzer Zeit homogene Filme und Formkörper bereitstellen lassen.

In einer weiteren Ausgestaltung des erfindungsgemäßen Verfahrens kann das Doppelbindungen enthaltende Polyethercarbonatpolyol einen Anteil an ungesättigten Comonomeren von größer oder gleich 0,1 mol-% und kleiner oder gleich 50 mol-% aufweisen. Im Zuge der weiteren Funktionalisierung der erfindungsgemäß eingesetzten Doppelbindungen enthaltenden Polyethercarbonatpolyole hat sich die Bereitstellung einer definierten Anzahl an Funktionalisierungsmöglichkeiten, welche im oben angegebenen Bereich liegt, als besonders vorteilhaft erwiesen. Dies bedeutet, dass in dem erfindungsgemäß eingesetzten Polyethercarbonatpolyol in etwa jede 2te bis jede 1000te Monomereinheit innerhalb der Polymerkette eine ungesättigte Gruppe trägt und demzufolge im Zuge einer Umsetzung mit Mercaptanen reagieren kann. Dadurch können besonders stabile, Mercapto-vernetzte Polyethercarbonate erhalten werden. Der Anteil an ungesättigten Comonomeren in den zu vernetzenden Polyethercarbonatpolyolen kann des Weiteren vorzugsweise größer oder gleich 0,5 Mol-% und kleiner oder gleich 15 Mol-% betragen, insbesondere größer oder gleich 1,0 Mol-% und kleiner oder gleich 10 Mol-% betragen.

In einer Ausgestaltung des Verfahrens kann das polyfunktionelle Mercaptan der folgenden Formel (XII) entsprechen:

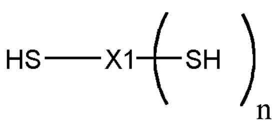

(XII),

wobei XI ein di- oder höhervalenter, Heteroatom-enthaltender oder nicht Heteroatom-enthaltender C2-C30 araliphatischer, aliphatischer oder cycloaliphatischer Rest und n eine ganze Zahl $\geq$ 1 ist.

In einer weiteren Ausgestaltung des Verfahrens können die polyfunktionellen Mercaptane aus der Gruppe der Di-, Tri- oder Tetraester des Trimethylolpropans, Trimethylolethans, Glycerins und Pentaerythrits mit 3-Mercaptopropionsäure und/oder 2-Mercaptoessigsäure ausgewählt sein. Gerade die oben genannte Gruppe an polyfunktionellen Mercaptanen hat sich bezüglich der Reaktionsgeschwindigkeit in der Umsetzung mit den erfindungsgemäß einsetzbaren Doppelbindungen enthaltenden Polyethercarbonatpolyolen als besonders geeignet erwiesen. Die Umsetzung erfolgt schon bei niedrigen Temperaturen quantitativ und es werden derart homogene Produkte mit bevorzugten mechanischen Eigenschaften erhalten.

In einer weiteren Ausgestaltung des erfindungsgemäßen Verfahrens kann das polyfunktionelle Mercaptan Pentaerythrit-tetra-3-mercaptopropionat sein. Das Pentaerythrit-tetra-3-mercaptopropionat kann im Rahmen des erfindungsgemäßen Verfahrens zu besonders langlebigen und stabilen, Mercapto-vernetzten Polyethercarbonaten führen.

Die hohe Stabilität basiert hochwahrscheinlich auf den sterischen Gegebenheiten des polyfunktionellen Mercaptans. Des Weiteren kann sich auch eine besonders günstige HOMO/LUMO-Lage des Vernetzers in Bezug zu den Doppelbindungen in dem Polyethercarbonatpolyol ergeben, welche zu einer schnellen und vollständigen Reaktion beitragen kann.

In einer weiteren Ausführungsform des Verfahrens kann die Initiatorverbindung aus der Gruppe der Photoinitiatoren, metallaktivierten Peroxide und/oder Redoxinitiatoren ausgewählt sein. Zur Erhöhung der Reaktionsgeschwindigkeit der Umsetzung zwischen den polyfunktionellen Mercaptanen und den Doppelbindungen des Polyethercarbonatpolyols können der Reaktionsmischung ein oder mehrere Initiatorverbindungen zugesetzt werden. Die radikalische Addition kann dabei mit

- Initiatoren, die in T. Myers, N. Kirk-Othmer, Encyclopedia of Chemical Technology (5th Edition) (2005), 14 274-311 oder in J. C.Bevington, Makromolekulare Chemie, Macromolecular Symposia 10-1, (1987) 89,

- Photoinitiatoren, die in J.P. Fouassier, X. Allonas, J. Lalevee; C. Dietlin, Photochemistry and Photophysics of Polymer Materials (2010) 351-419,

- metallaktivierten Peroxiden, die in C. Sma, Angewandte Makromolekulare Chemie 9 (1969) 165-181 oder mit

- Redoxinitiatoren, die in G. S. Misra,; U. D. N. Bajpai Progress in Polymer Science 8 (1-2) (1982) 61-131

beschrieben sind, beschleunigt werden.

Bevorzugt ist der Einsatz von Photoinitiatoren. Photoinitiatoren im Sinne der Erfindung sind z.B. Bis(2,4,6-Trimethylbenzoyl)-phenylphosphinoxid, Diphenylmesitoylphosphinoxid, Campherchinon, Isopropylthioxanthon, Michlers keton, Benzophenon, Benzoinmethylether, Dimethoxyphenylacetophenon oder 2,2-Dimethyl-2-hydroxyacetophenon.

Die Radikalinitiatoren können in Mengen von größer oder gleich 0,01 Gew.-% und kleiner oder gleich 2 Gew-% bezogen auf das Polyethercarbonatpolyol eingesetzt werden. Redoxinitiatoren sind dabei ein Gemisch aus einer oxidierenden und einer reduzierenden Substanz. Photoinitiatoren des Typs II bedürfen des Zusatzes eines Wasserstoffdonors, wie eines Amins oder einer Mercaptoverbindung, wobei auch die polyfunktionellen Mercaptane diese Funktion erfüllen können.

In einer zusätzlichen Ausgestaltung des Verfahrens kann die Initiatorverbindung Bis(2,4,6-trimethylbenzoyl)-phenylphosphinoxid, 2,4,6-Trimethylbenzoyl-diphenylphosphinoxid, Campherchinon, 4-Isopropyl-9-thioxanthenon, 2-Benzoyl-3-methyl-3-ethyloxaziridin, Bis(2,6-dichlorbenzoyl)-4-n-propylphenylphosphinoxid und/oder Bis($\eta^5$-2,4-cyclopentadien-1-yl)-bis(2,6-difluoro-3-(1H-pyrrol-1-yl)-phenyltitan sein. Zur gleichmäßigen und gesteuerten Vernetzung von Doppelbindungen enthaltenden Polyethercarbonatpolyolen mit polyfunktionellen Mercaptanen hat sich Bis(2,4,6-trimethylbenzoyl)-phenylphosphinoxid als besonders geeignet erwiesen. Dieser Initiator lässt sich unter den gewählten Reaktionsbedingungen einfach und reproduzierbar aktivieren und liefert nach Reaktionsende Abfallprodukte, welche die mechanischen Eigenschaften der Mercaptan-vernetzen Polyethercarbonate nur unwesentlich beeinflussen.

Innerhalb einer bevorzugten Charakteristik des Verfahrens kann das Verhältnis von Doppelbindungen zu Mercapto-Gruppen größer oder gleich 1:1 und kleiner oder gleich 10:1 betragen. Dieses Verhältnis der Doppelbindungen im Polyethercarbonatpolyol zu Mercaptogruppen in den polyfunktionellen Mercaptanen hat sich zum Erhalt möglichst stabiler und langlebiger dreidimensionaler Formkörper oder Schichten als vorteilhaft erwiesen. Niedrigere Verhältnisse sind nicht vorteilhaft, da eine Restfunktionalität durch nicht abreagierte polyfunktionelle Mercaptane im Mercapto-vernetzten Polyethercarbonat übrigbleiben kann. Dies kann sich auf die Lagerstabilität der Produkte auswirken. Höhere Verhältnisse können hingegen unvorteilhaft sein, da diese nur zu einer nicht ausreichenden Stabilisierung durch den geringen Anteil an Vernetzer führen können.

In einer weiteren Ausführungsform des Verfahrens kann das molare Verhältnis der Doppelbindungen im Polyethercarbonatpolyol zu eingesetzten Mercaptogruppen größer oder gleich 1:1 und kleiner oder gleich 2:1 betragen. Dieses molare Verhältnis von reaktiven Doppelbindungen am Polymergerüst zu vernetzenden Mercaptogruppen hat sich in Bezug auf eine hinreichend schnelle Vernetzung und einer ausreichend hohe Vernetzungsdichte des Mercapto-vernetzten Polyethercarbonats als besonders günstig erwiesen. Ein kleineres Verhältnis kann zu einer nur unvollständigen Umsetzung und einer nur zu geringen Festigkeit der vernetzten Endprodukte führen. Ein höheres Verhältnis kann gegebenenfalls die Elastizität der Produkte ungünstig beeinflussen.

Des Weiteren erfindungsgemäß ist ein Mercapto-vernetztes Polyethercarbonat erhältlich durch die Reaktion von Doppelbindungen enthaltenden Polyethercarbonatpolyolen und polyfunktionellen Mercaptanen nach dem erfindungsgemäßen Verfahren. Die nach dem erfindungsgemäßen Verfahren erhältlichen Mercapto-vernetzten Polyethercarbonate lassen sich relativ einfach herstellen und zeigen reproduzierbare mechanische Eigenschaften und eine ausgezeichnete Stabilität. Dies kann auf eine vorteilhafte Viskosität der eingesetzten Edukte und eine vollständige und

kontrollierbare Vernetzungsreaktion zwischen den polyfunktionellen Mercaptanen und den Doppelbindungen enthaltenden Polyethercarbonatpolyolen zurückgeführt werden.

In einer weiteren Ausgestaltung kann das Mercapto-vernetzte Polyethercarbonat dadurch erhältlich sein, dass die Reaktion durch UV-Bestrahlung mit einer Intensität von größer oder gleich 5 $W/cm^2$ und kleiner oder gleich 40 $W/cm^2$ gestartet wird. Zur gleichmäßigen Vernetzung der polyfunktionellen Mercaptane mit den Doppelbindungen enthaltenden Polyethercarbonatpolyolen hat sich die UV-induzierte Spaltung der Initiatorverbindungen als besonders vorteilhaft erwiesen. Bedingt durch das Starten der radikalischen Umsetzung mit nur moderaten Energiedichten kann die Vernetzung homogen durch die gesamte Reaktionsmischung erfolgen. Derart kann eine konstante Vernetzungsdichte des Polymers erreicht werden. Geringere Energiedichten können zu einer nur unvollständigen Spaltung der Initiatorverbindungen führen, wohingegen höhere Energiedichten zu einer ungewollten Reaktion der einzelnen Doppelbindungen des Polyethercarbonatpolyols führen kann. Zweckmäßigerweise kann man zum Starten der Vernetzungsreaktion handelsübliche Quecksilber-Dampflampen mit einem Wellenlängenspektrum von 180 - 580 nm benutzen. Es hat sich als besonders vorteilhaft herausgestellt, mittels eines optischen Filters nur den Wellenlängenbereich von 180-320 nm zum Starten der radikalischen Vernetzung einzusetzen.

Die nach dem erfindungsgemäßen Verfahren erhältlichen Mercapto-vernetzten Polyethercarbonate können als Dichtmasse, Klebstoff, Lack oder duromerer Formkörper Verwendung finden. Die erfindungsgemäßen Mercapto-vernetzten Polyethercarbonate sind als Kautschuke, Dichtmassen, Klebstoffe, Lacke oder duromere Formkörper einsetzbar. Sie sind aus einfach zu verarbeitenden flüssigen Ausgangsprodukten zugänglich und enthalten im Gegensatz zu ungesättigten Polyestern keine niedermolekularen Monomere, wie Styrol, Vinylether oder Vinylester. Ferner enthalten die zu härtenden Mischungen keine Lösungsmittel. Die Mischungen aus Doppelbindungen enthaltenden Polyethercarbonatpolyolen, polyfunktionellen Mercaptanen und Initiatoren können in Gießformen oder RIM-Prozessen Verwendung finden. Auch für Druckfarben, Lithographie oder Stereolithographie (Rapid Prototyping) sind die Mischungen aus Doppelbindungen enthaltenden Polyethercarbonatpolyolen, polyfunktionellen Mercaptanen und Initiatoren sowie deren ausgehärteten Reaktionsprodukte einsetzbar.

Des Weiteren erfindungsgemäß ist ein Formkörper mit einer Schicht umfassend ein Mercaptovernetztes Polyethercarbonat. Die erfindungsgemäß herstellbaren Mercapto-vernetzten Polyethercarbonate können sich besonders zum Aufbau mechanisch stabiler Schichten auf Formkörpern eigenen, da sich die erfindungsgemäßen Polyethercarbonatpolyole einfach und reproduzierbar auf Formkörpern platzieren lassen und eine weitere Vernetzungsreaktionen, zum Beispiel mit Radikalinitiatoren, einfach und reproduzierbar durchführbar ist. Dies kann sich insbesondere daraus ergeben, dass die eingesetzten Edukte bei Raumtemperatur flüssig sind und sich so leicht verarbeiten lassen.

Hinsichtlich weiterer Vorteile und Merkmale des vorbeschriebenen Formkörpers wird hiermit explizit auf die Erläuterungen im Zusammenhang mit den erfindungsgemäßen Mercapto-vernetzten Polyethercarbonaten sowie dem erfindungsgemäßen Verfahren zu deren Vernetzung verwiesen. Auch sollen erfindungsgemäße Merkmale und Vorteile der Polyethercarbonatpolyole auch für das erfindungsgemäße Verfahren und die erfindungsgemäßen Formkörper anwendbar sein und als offenbart gelten und umgekehrt. Unter die Erfindung fallen auch sämtliche Kombinationen aus zumindest zwei von in der Beschreibung und/oder den Ansprüchen offenbarten Merkmalen.

## Beispiele

### Substanzen:

Eingesetzte H-funktionelle Startersubstanz (Starter):

PET-1 difunktionelles Poly(oxypropylen)polyol mit einer OH-Zahl von 112 $mg_{KOH}/g$

Eingesetztes Epoxid das keine Doppelbindungen trägt:

PO Propylenoxid

Eingesetztes Comonomer:

AGE Allylglycidylether, enthaltend elektronenreiche Doppelbindungen

Eingesetztes polyfunktionelles Mercaptan:

Pentaerythrit-tetra-3-mercaptopropionat

Eingesetzter Radikalstarter:

Bis(2,4,6-trimethylbenzoyl)-phenylphosphinoxid (Irgacure 819)
Der DMC-Katalysator wurde hergestellt nach Beispiel 6 der WO-A 01/80994.

**Methoden:**

OH-Zahl (Hydroxylzahl)

Die OH-Zahl (Hydroxylzahl) wurde in Anlehnung an DIN 53240-2 bestimmt, wobei jedoch N-Methylpyrrolidon anstelle von THF/Dichlormethan als Lösemittel verwendet wurde. Es wurde mit 0,5 molarer ethanolischer KOH Lösung titriert und die Endpunktserkennung erfolgte mittels Potentiometrie. Als Prüfsubstanz diente zertifiziertes Rizinusöl. Die Angabe der Einheit in "$mg_{KOH}/g$" bezieht sich auf mg[KOH]/g[Polyethercarbonatpolyol].

Gelpermeationschromatographie

Das Zahlenmittel $M_n$ und das Gewichtsmittel $M_w$ des Molekulargewichts der entstandenen Polyethercarbonatpolyole wurde mittels Gelpermeationschromatographie (GPC) bestimmt. Es wurde nach DIN 55672-1: "Gelpermeationschromatographie, Teil 1 - Tetrahydrofuran als Elutionsmittel" vorgegangen (SECurity GPC-System von PSS Polymer Service, Flussrate 1.0 ml/min; Säulen: 2×PSS SDV linear M, 8×300 mm, 5 μm; RID-Detektor). Dabei wurden Polystyrolproben bekannter Molmasse zur Kalibrierung verwendet. Die Polydispersität wurde als das Verhältnis $M_w/M_n$ berechnet.

Rheologie

Die Viskosität des Produktgemisches wurde mit einem Rheometer Physica MCR 501 der Firma Anton Paar bei 25°C bestimmt, wobei eine Kugel-Platte-Konfiguration mit einem Kugeldurchmesser von 25 mm mit einem Abstand von 0,05 mm zwischen Kugel und Platte verwendet wurden. Die Scherrate wurde innerhalb von 10 min von 0,01 auf 1000 1/s gesteigert. Alle 10 s wurde ein Wert genommen. Angegeben ist die Viskosität als der Durchschnitt der insgesamt 60 Messwerte.

$^1$H-NMR Spektroskopie

Die Probe wurde in deuteriertem Chloroform gelöst und auf einem Spektrometer der Firma Bruker (AV400, 400 MHz) vermessen.

**Herstellung der ungesättigten Polyethercarbonatpolyole:**

Die Polymerisationsreaktionen wurden in einem 300 ml Druckreaktor der Fa. Parr durchgeführt. Der in den Beispielen eingesetzte Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [erste Aktivierungsstufe] im Durchschnitt bei ca. 20% der maximalen Heizleistung. Durch die Regelung schwankte die Heizleistung um ±5% der maximalen Heizleistung. Das Auftreten einer erhöhten Wärmeentwicklung im Reaktor, hervorgerufen durch die rasche Umsetzung von Propylenoxid während der Aktivierung des Katalysators [zweite Aktivierungsstufe] wurde beobachtet über eine reduzierte Wärmeleistung des Heizmantels, Einschalten der Gegenkühlung und gegebenenfalls einem Temperaturanstieg im Reaktor. Das Auftreten einer Wärmeentwicklung im Reaktor, hervorgerufen durch die kontinuierliche Umsetzung von Propylenoxid und der Verbindungen enthaltend Doppelbindungen während der Reaktion [Polymerisationsstufe] führte zu einem Absenken der Leistung des Heizmantels auf ca. 8% der maximalen Heizleistung. Durch die Regelung schwankte die Heizleistung um ±5% der maximalen Heizleistung.

Bei dem in den Beispielen eingesetzten Rührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde.

a) Bei der Terpolymerisation von Propylenoxid, ungesättigter Epoxide und/oder cyclischer Anhydride und_$CO_2$ resultiert neben dem cyclischen Propylencarbonat das Doppelbindungen enthaltende Polyethercarbonatpolyol, welches einerseits in Formel (XIII) gezeigte Polycarbonat-Einheiten

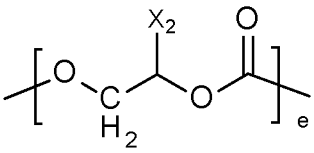

bzw.

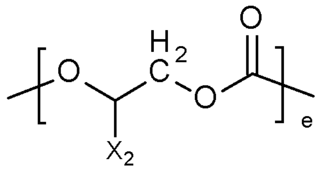

(XIII)

und andererseits in Formel (XIV) gezeigte Polyether-Einheiten

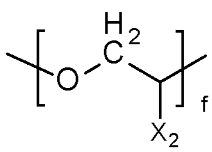

bzw.

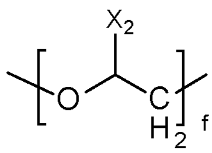

(XIV)

enthält. Hierbei steht X2 entweder für Methyl oder eine Seitenkette, die aus der Umsetzung des ungesättigten Epoxids hervorgeht. Durch Einbau cyclischer Anhydride in die gebildete Polymerkette kann das gebildete Polyethercarbonatpolyol neben Ether- und Carbonatgruppen zusätzlich Estergruppen enthalten.

Die Charakterisierung des Reaktionsgemisches erfolgte durch $^1$H-NMR Spektroskopie und Gelpermeationschromatographie.

Das Verhältnis der Menge an cyclischem Propylencarbonat zu Polyethercarbonatpolyol (Selektivität; Verhältnis g/e) sowie der Anteil der nicht umgesetzten Monomere (Propylenoxid $R_{PO}$, Allylglycidylether $R_{AGE}$ in mol%) wurden mittels $^1$H-NMR Spektroskopie bestimmt.

Anschließend wurde die Reaktionsmischung mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Epoxide, cyclisches Carbonat, Lösungsmittel) gereinigte Reaktionsmischung wurde am unteren Ende des beheizten Rohres in einer Vorlage aufgefangen.

Das molare Verhältnis von Carbonatgruppen zu Ethergruppen im Polyethercarbonatpolyol (Verhältnis e/f) sowie der molare Anteil von in das Polymer eingebautem Allylglycidylether wurden mittels $^1$H-NMR Spektroskopie bestimmt.

Die relevanten Resonanzen im $^1$H-NMR Spektrum (bezogen auf TMS = 0 ppm), die zur Integration verwendet wurden, sind wie folgt:

| Signal | Verschiebung in ppm | Bezeichnung | Fläche entspricht Anzahl H-Atomen |
|---|---|---|---|
| I1 | 1,10 - 1,17 | $CH_3$-Gruppe Polyether-Einheiten | 3 |
| I2 | 1,25 - 1,34 | $CH_3$-Gruppe Polycarbonat-Einheiten | 3 |
| I3 | 1,45 - 1,48 | $CH_3$-Gruppe cyclisches Carbonat | 3 |

(fortgesetzt)

| Signal | Verschiebung in ppm | Bezeichnung | Fläche entspricht Anzahl H-Atomen |
|---|---|---|---|
| I4 | 2,95 - 3,00 | CH-Gruppen freies, nicht abreagiertes Propylenoxid | 1 |
| I5 | 5,83 - 5,94 | CH Gruppe der in das Polymer über den Einbau von Allylglycidylether erhaltenen Doppelbindung | 1 |
| I6 | 2,85 - 2,90 | CH-Gruppen des freien, nicht abreagierten Allylglycidylethers | 1 |

Angegeben ist das molare Verhältnis der Menge an cyclischem Propylencarbonat zu Carbonat-Einheiten im Polyethercarbonatpolyol (Selektivität g/e) und das molare Verhältnis von Carbonatzu Ethergruppen im Polyethercarbonatpolyol (e/f) sowie die Anteile des nicht umgesetzten Propylenoxids (in mol%) und Maleinsäureanhydrids (in mol%).
Unter Berücksichtigung der relativen Intensitäten wurden die Werte wie folgt berechnet:
Molares Verhältnis der Menge an cyclischem Propylencarbonat zu Carbonat-Einheiten im Polyethercarbonatpolyol (Selektivität g/e):

$$g/e = I3 / I2$$

Molares Verhältnis von Carbonatgruppen zu Ethergruppen im Polyethercarbonatpolyol (e/f):

$$e/f = I2 / I1$$

Der Anteil an Carbonateinheiten in den Wiederholungseinheiten des Polyethercarbonatpolyols erhalten aus der Copolymerisation von Propylenoxid und $CO_2$:

$$C_{Carbonat} = [(I2/3) / ((I1/3) + (I2/3))] \times 100\%$$

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R_{PO} = [(I4) / ((I1/3) + (I2/3) + (I3/3) + (I4))] \times 100\%$$

Der Anteil an Carbonateinheiten in den Wiederholungseinheiten des Polyethercarbonatpolyols erhalten aus der Terpolymerisation von Propylenoxid, Allylglycidylether und $CO_2$:

$$C'_{Carbonat} = [(I2/3) / ((I1/3) + (I2/3) + (I5))] \times 100\%$$

Der Anteil der über den Einbau des Allylglycidylethers resultierenden Doppelbindungen in den Wiederholungseinheiten des Polyethercarbonatpolyols:

$$A_{Doppelbindung} = [(I5) / ((I1/3) + (I2/3) + (I5))] \times 100\%$$

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R'_{PO} = [(I4) / ((I1/3) + (I2/3) + (I3/3) + (I4) + (I5) + (I6))] \times 100\%$$

Der molare Anteil des nicht umgesetzten Allylglycidylethers ($R_{AGE}$ in mol%) bezogen auf die Summe der bei der Aktivierung und der Copolymerisation eingesetzten Menge an Allylglycidylether, berechnet sich nach der Formel:

$$R_{AGE} = [(I6) / ((I1/3) + (I2/3) + (I3/3) + (I4) + (I5) + (I6))] \times 100\%$$

Herstellung der Polyethercarbonatpolyole

Beispiel 1: Terpolymerisation einer Mischung von Propylenoxid, Allylglycidylether (4,3-Mol%) und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (8,2 Gew.% Allylglycidylether [entsprechend 4,3 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g einer Monomermischung wurde ein zweites und drittes Mal wiederholt.

[Polymerisationsstufe]

Nach Abkühlen auf 100°C wurden weitere 53,9 g der Monomermischung (8,2 Gew.% Allylglycidylether [entsprechend 4,3 Mol%] gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid ($R'_{PO}$ = 0%) und Allylglycidylether ($R_{AGE}$ = 0%).

| | | |
|---|---|---|
| Selektivität | g/e | 0,05 |
| | e/f | 0,23 |
| $C'_{Carbonat}$ in % | | 19,3 |
| $A_{Doppelbindung}$ in % | | 2,6 |
| Molekulargewicht in g/mol | $M_n$ | 5428 |
| Polydispersität | | 1,2 |
| OH-Zahl in $Mg_{KOH}/g$ | | 26,0 |
| Viskosität in mPa·s | | 4’600 |

Beispiel 2: Terpolymerisation einer Mischung von Propylenoxid, Allylglycidylether (8,3 mol-%) und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (15,2 Gew.% Allylglycidylether [entsprechend 8,3 Mol%] gelöst in Propylenoxid) mit Hilfe einer HPLC-Pumpe (1 ml/min) zudosiert. Die Reaktionsmischung wurde 20 min

bei 130°C gerührt (800 rpm). Die Zugabe von 2,0 g einer Monomermischung wurde ein zweites und drittes Mal wiederholt.

[Polymerisationsstufe]

Nach Abkühlen auf 100°C wurden weitere 54,0 g der Monomermischung (15,2 Gew.% Allylglycidylether [entsprechend 8,3 Mol%] gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid ($R'_{PO}$ = 0%) und Allylglycidylether ($R_{AGE}$ = 0%).

| | | |
|---|---|---|
| Selektivität | g/e | 0,06 |
| | e/f | 0,25 |
| $C'_{Carbonat}$ in % | | 20,3 |
| $A_{Doppelbindung}$ in % | | 6,4 |
| Molekulargewicht in g/mol | $M_n$ | 5446 |
| Polydispersität | | 2,0 |
| OH-Zahl in $Mg_{KOH}$/g | | 26,9 |
| Viskosität in mPa·s | | 4'000 |

<u>Beispiel 3:</u> Terpolymerisation einer Mischung von Propylenoxid, Allylglycidylether (16,4 mol-%) und $CO_2$

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g einer Monomermischung (30,4 Gew.% Allylglycidylether [entsprechend 16,4 Mol%] gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 2,0 g einer Monomermischung wurde ein zweites und drittes Mal wiederholt.

[Polymerisationsstufe]

Nach Abkühlen auf 100°C wurden weitere 54,0 g der Monomermischung (30,4 Gew.% Allylglycidylether [entsprechend 16,4 Mol%] gelöst in Propylenoxid) über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.

Das resultierende Gemisch war frei von den eingesetzten Monomeren Propylenoxid ($R'_{PO}$ = 0%) und Allylglycidylether ($R_{AGE}$ = 0%).

| | | |
|---|---|---|
| Selektivität | g/e | 0,09 |
| | e/f | 0,28 |
| $C'_{Carbonat}$ in % | | 22,2 |
| $A_{Doppelbindung}$ in % | | 13,6 |
| Molekulargewicht in g/mol | $M_n$ | 5432 |
| Polydispersität | | 1,8 |
| OH-Zahl in $mg_{KOH}$/g | | 28,6 |

(fortgesetzt)

| | |
|---|---|
| Viskosität in mPa·s | 4’800 |

Beispiel 4 (Vgl.): Copolymerisation von Propylenoxid und $CO_2$ ohne Zugabe von Allylglycidylether

[erste Aktivierungsstufe]

In einem 300 ml Druckreaktor ausgestattet mit einem Gaseintragsrührer wurde eine Mischung aus DMC-Katalysator (16 mg) und PET-1 (20 g) vorgelegt und 30 min bei 130°C in einem partiellen Vakuum (50 mbar) unter Durchleiten von Argon durch die Reaktionsmischung gerührt.

[zweite Aktivierungsstufe]

Nach Aufpressen von 15 bar $CO_2$, wobei ein leichter Temperaturabfall zu beobachten war, und Wiedererreichen einer Temperatur von 130°C wurden 2,0 g Propylenoxid mit Hilfe einer HPLC-Pumpe (1 ml/min) zudosiert. Die Reaktionsmischung wurde 20 min bei 130°C gerührt (800 rpm). Die Zugabe von 2,0 g Propylenoxid wurde ein zweites und drittes Mal wiederholt.

[Polymerisationsstufe]

Nach Abkühlen auf 100°C wurden weitere 54,0 g Propylenoxid über eine HPLC-Pumpe (1 ml/min) zudosiert, wobei der $CO_2$ Druck konstant auf 15 bar gehalten wurde. Anschließend wurde die Reaktionsmischung weitere 2 h bei 100°C gerührt. Die Reaktion wurde durch Kühlung des Reaktors mit Eiswasser gestoppt.
Das resultierende Gemisch war frei von Propylenoxid ($R_{PO}$= 0%).

| | | |
|---|---|---|
| Selektivität | g/e | 0,09 |
| | e/f | 0,26 |
| $C_{Carbonat}$ in % | | 20,7 |
| $A_{Doppelbindung}$ in % | | ---- |
| Molekulargewicht in g/mol | $M_n$ | 5495 |
| Polydispersität | | 1,4 |
| OH-Zahl in $mg_{KOH}$/g | | 26,2 |
| Viskosität in mPa·s | | 7’900 |

Herstellung der Mischungen aus Polyethercarbonatpolyolen mit polyfunktionellem Mercaptan und Photoinitiator

Beispiel 1A: Mischung Terpolymer, elektronenreich, 2,6 mol-% Allylglycidylether + polyfunktionellem Mercaptan

In einem mit Aluminiumfolie abgedunkelten Glasfläschchen wurden 3 g des Polyethercarbonatpolyols aus Beispiel 1 mit der äquimolaren Menge (SH bezogen auf Doppelbindungen) Pentaerythrit-tetra-3-mercaptopropionat (0,175 g) und 0,003 g Bis(2,4,6-trimethylbenzoyl)-phenylphosphinoxid vermischt.

Beispiel 2A: Mischung Terpolymer, elektronenreich, 6,4 mol-% Allylglycidylether + polyfunktionellem Mercaptan

In einem mit Aluminiumfolie abgedunkelten Glasfläschchen wurden 3 g des Polyethercarbonatpolyols aus Beispiel 2 mit der äquimolaren Menge (SH bezogen auf Doppelbindungen) Pentaerythrit-tetra-3-mercaptopropionat (0,35 g) und 0,003 g Bis(2,4,6-trimethylbenzoyl)-phenylphosphinoxid vermischt.

Beispiel 3A: Mischung Terpolymer, elektronenreich, 13,6 mol-% Allylglycidylether + polyfunktionellem Mercaptan

In einem mit Aluminiumfolie abgedunkelten Glasfläschchen wurden 3 g des Polyethercarbonatpolyols aus Beispiel 3 mit der äquimolaren Menge (SH bezogen auf Doppelbindungen) Pentaerythrit-tetra-3-mercaptopropionat (0,7

g) und 0,003 g Bis(2,4,6-trimethylbenzoyl)-phenylphosphinoxid vermischt.

Beispiel 4A (Vgl.): Copolymer, ohne Doppelbindungen + polyfunktionellem Mercaptan

In einem mit Aluminiumfolie abgedunkelten Glasfläschchen wurden 3 g des Polyethercarbonatpolyols aus Vergleichsbeispiel 4 und 0,003 g Bis(2,4,6-trimethylbenzoyl)-phenylphosphinoxid vermischt.

Radikalische Vernetzung von Polyethercarbonatpolyolen unter UV-Bestrahlung

Die Vernetzung unter UV-Bestrahlung wurde auf einem Rheometer Physica MCR 501 der Fa. Anton Paar ausgestattet mit einem Messsystem D-PP15 (Platte-Platte-Konfiguration mit einem Plattenabstand von 1 mm) durchgeführt. Je eine Probe (0,4 g) der Mischung aus Polyethercarbonatpolyol und polyfunktionellen Mercaptanen wurden auf der Rheometerplatte des Rheometers gemischt und bei 25°C und einer dynamischen Oszillation von 1Hz einer 10%igen Scherung unterworfen. Gleichzeitig wurde die Probe einer UV Bestrahlung ausgesetzt. Als Strahlungsquelle wurde eine Quecksilberlampe Omnicure Series 1000 der Fa. Lumen Dynamics mit einer Leistung von 100 W eingesetzt. Als Filteroption wurde 320-500 nm gewählt. Über zwei Minuten wurde viermal pro Sekunde der Speicher- und Verlustmodul gemessen. Als Gelpunkt wurde der Zeitpunkt gewählt, an dem Speichermodul (G') und Verlustmodul (G") gleich groß sind (G'/G"=1).

Beispiel 1B: Aushärtung einer Mischung aus Terpolymer, elektronenreich, 2,6 mol-% Allylglycidylether + polyfunktionellem Mercaptan

Es wurden 0,4 g der Mischung aus Beispiel 1A eingesetzt und mit UV-Licht einer Bestrahlungsintensität von 5,1 $W/cm^2$ bestrahlt. Der Gelpunkt trat nach 49 s ein.

Beispiel 2B: Aushärtung einer Mischung aus Terpolymer, elektronenreich, 6,4 mol-% Allylglycidylether + polyfunktionellem Mercaptan

Es wurden 0,4 g der Mischung aus Beispiel 2A eingesetzt und mit UV-Licht einer Bestrahlungsintensität von 5,1 $W/cm^2$ bestrahlt. Der Gelpunkt trat nach 13 s ein.

Beispiel 3B: Aushärtung einer Mischung aus Terpolymer, elektronenreich, 13,6 mol-% Allylglycidylether + polyfunktionellem Mercaptan

Es wurden 0,4 g der Mischung aus Beispiel 3A eingesetzt und mit UV-Licht einer Bestrahlungsintensität von 5,1 $W/cm^2$ bestrahlt. Der Gelpunkt trat nach 6 s ein.

Beispiel 4B (Vgl.): Aushärtung einer Mischung aus Copolymer ohne Doppelbindungen + polyfunktionellem Mercaptan

Es wurden 0,4 g der Mischung aus Vergleichsbeispiel 4A eingesetzt und mit UV-Licht einer Bestrahlungsintensität von 5,1 $W/cm^2$ bestrahlt. Es war kein Gelpunkt zu beobachten.

Tabelle 1: Vergleich der Resultate aus den Beispielen 1B bis 4B

| Beispiel | Mischung | Anteil Doppelbindungen im Polyethercarbonatpolyol in mol-% | Zeit bis Erreichen des Gelpunktes in Sekunden |
|---|---|---|---|
| 1B | Terpolymer + polyfunktionelles Mercaptan | 2,6 | 49 |
| 2B | Terpolymer + polyfunktionelles Mercaptan | 6,4 | 13 |
| 3B | Terpolymer + polyfunktionelles Mercaptan | 13,6 | 6 |
| 4B (Vgl.) | Copolymer + polyfunktionelles Mercaptan | --- | Keine Aushärtung |
| Vgl.: Vergleichsbeispiel | | | |

Ein Vergleich der Beispiele 1B bis 3B mit dem Vergleichsbeispiel 4B zeigt, dass die Terpolymere durch Bestrahlung mit UV-Licht aushärten, während das Copolymer ohne Einbau von Allylglycidylether nicht aushärtet. Mit einem höheren Anteil an eingebautem Allylglycidylether sinkt die Zeit bis Erreichen des Gelpunktes von 49 s (Beispiel 1B) auf 6 s (Beispiel 3B).

Aushärtung unter Variation der Bestrahlungsintensität

Beispiel 2B-1: Aushärtung einer Mischung aus Terpolymer, elektronenreich, 6,4 mol-% Allylglycidylether + polyfunktionellem Mercaptan

Es wurden 0,4 g der Mischung aus Beispiel 2A eingesetzt und mit UV-Licht einer Bestrahlungsintensität von 5,1 W/cm$^2$ bestrahlt. Der Gelpunkt trat nach 13 s ein.

Beispiel 2B-2: Aushärtung einer Mischung aus Terpolymer, elektronenreich, 6,4 mol-% Allylglycidylether + polyfunktionellem Mercaptan

Es wurden 0,4 g der Mischung aus Beispiel 2A eingesetzt und mit UV-Licht einer Bestrahlungsintensität von 10,9 W/cm$^2$ bestrahlt. Der Gelpunkt trat nach 8 s ein.

Beispiel 2B-3: Aushärtung einer Mischung aus Terpolymer, elektronenreich, 6,4 mol-% Allylglycidylether + polyfunktionellem Mercaptan

Es wurden 0,4 g der Mischung aus Beispiel 2A eingesetzt und mit UV-Licht einer Bestrahlungsintensität von 16,8 W/cm$^2$ bestrahlt. Der Gelpunkt trat nach 5,5 s ein.

Beispiel 2B-4: Aushärtung einer Mischung aus Terpolymer, elektronenreich, 6,4 mol-% Allylglycidylether + polyfunktionellem Mercaptan

Es wurden 0,4 g der Mischung aus Beispiel 2A eingesetzt und mit UV-Licht einer Bestrahlungsintensität von 22,7 W/cm bestrahlt. Der Gelpunkt trat nach 3 s ein.

Beispiel 2B-5 (Vgl.): Aushärtung einer Mischung aus Terpolymer, elektronenreich, 6,4 mol-% Allylglycidylether + polyfunktionellem Mercaptan ohne Bestrahlung mit UV-Licht

Es wurden 0,4 g der Mischung aus Beispiel 2A eingesetzt. Es fand keine UV-Bestrahlung statt. Es war kein Gelpunkt zu beobachten.

Tabelle 2: Vergleich der Resultate aus den Beispielen 9 bis 13

| Beispiel | Intensität UV-Licht in W/cm$^2$ | Zeit bis Erreichen des Gelpunktes in Sekunden |
|---|---|---|
| 2B-1 | 5,1 | 13 |
| 2B-2 | 10,9 | 8 |
| 2B-3 | 16,8 | 5,5 |
| 2B-4 | 22,7 | 3 |
| 2B-5 (Vgl.) | 0 | keine Aushärtung |
| Vgl.: Vergleichsbeispiel | | |

Ein Vergleich der Beispiele 2B-1 bis 2B-4 zeigt, dass die Zeit bis zum Erreichen des Gelpunktes bei Zunahme der Bestrahlungsintensität abnimmt. Ohne UV-Bestrahlung härtet die Mischung innerhalb des Messzeitraums nicht aus (Vergleichsbeispiel 2B-5).

## Patentansprüche

1. Verfahren zur Herstellung Mercapto-vernetzter Polyethercarbonate, **dadurch gekennzeichnet, dass** Doppelbindungen enthaltende Polyethercarbonatpolyole mit polyfunktionellen Mercaptanen und/oder Schwefel unter Einwirkung von Initiatorverbindungen zur Reaktion gebracht werden.

**2.** Verfahren nach Anspruch 1, wobei die Herstellung der Doppelbindungen enthaltenden Polyethercarbonatpolyole die Schritte:

(α) Vorlegen eines Katalysators und:

(αα) eines Suspensionsmittels, das keine H-funktionellen Gruppen enthält und/oder
(αβ) einer H-funktionellen Starterverbindung,

(γ) Zudosieren von Kohlendioxid und

- mindestens zweier Epoxide, wobei mindestens eines der beiden Epoxide eine Doppelbindung aufweist oder
- eines Epoxides und eines ungesättigten cyclischen Anhydrids,

umfasst.

**3.** Verfahren nach Anspruch 2, weiterhin umfassend den Schritt (β) zwischen Schritt (α) und Schritt (γ):

(β) Zudosieren mindestens eines Epoxides, wobei das oder die in Schritt (γ) zudosierten Epoxide von dem im Schritt (β) zudosierten Epoxid oder zudosierten Epoxiden gleich oder verschieden sein können.

**4.** Verfahren nach Anspruch 2 oder 3, wobei der Katalysator ein DMC-Katalysator ist.

**5.** Verfahren nach einem der Ansprüche 2 bis 4, wobei die in Schritt (γ) zudosierten ungesättigten cyclischen Anhydride ausgewählt sind aus der Gruppe umfassend 4-Cyclohexen-1,2-disäureanhydrid, 4-Methyl-4-cyclohexen-1,2-disäureanhydrid, 5,6-Norbornen-2,3-disäureanhydrid, Allyl-5,6-norbornen-2,3-disäureanhydrid, Dodecenylbernsteinsäureanhydrid, Tetradecenylbernsteinsäureanhydrid, Hexadecenylbernsteinsäureanhydrid und/oder Octadecenylbernsteinsäureanhydrid.

**6.** Verfahren nach einem der Ansprüche 2 bis 5 , wobei die in Schritt (γ) zudosierten ungesättigten cyclischen Anhydride folgenden Formeln (IX), (X) und (XI) entsprechen:

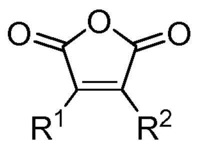
(IX)

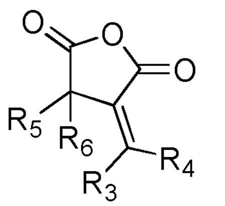
(X)

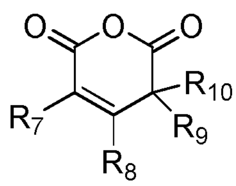
,
(XI)

wobei $R^1$ - $R^{10}$ unabhängig voneinander für Wasserstoff, Halogen, C1-C22-Alkyl- oder C6-C14 Arylreste stehen. In einer weiteren Ausgestaltung kann $R^1$ - $R^2$ nur für Wasserstoff und $R^3$ - $R^{10}$ für Wasserstoff, C1-C22-Alkyl oder C6-C14 Arylreste stehen.

**7.** Verfahren nach einem der Ansprüche 2 bis 6, wobei die in Schritt (γ) zudosierten Epoxide mit Doppelbindung ausgewählt sind aus der Gruppe umfassend Allylglycidylether, Vinylcyclohexenoxid, Cyclooctadienmonoepoxid, Cyclododecatrienmonoepoxid, Butadienmonoepoxid, Isoprenmonoepoxid und/oder Limonenoxid.

**8.** Verfahren nach einem der vorhergehenden Ansprüche, wobei das Doppelbindungen enthaltende Polyethercarbonatpolyol einen Anteil an ungesättigten Comonomeren von größer oder gleich 0,1 mol-% und kleiner oder gleich 50 mol-% aufweist.

**9.** Verfahren nach einem der vorhergehenden Ansprüche, wobei die polyfunktionellen Mercaptane ausgewählt sind

aus der Gruppe der Di-, Tri- oder Tetraester des Trimethylolpropans, Trimethylolethans, Glycerins und Pentaerythrits mit 3-Mercaptopropionsäure und/oder 2-Mercaptoessigsäure.

**10.** Verfahren nach einem der vorhergehenden Ansprüche, wobei die Initiatorverbindung ausgewählt ist aus der Gruppe der Photoinitiatoren, Peroxide, Azoverbindungen, metallaktivierten Peroxide und/oder Redoxinitiatoren.

**11.** Verfahren nach einem der vorhergehenden Ansprüche, wobei das Verhältnis von Doppelbindungen zu Mercapto-Gruppen größer oder gleich 1:1 und kleiner oder gleich 10:1 beträgt.

**12.** Mercapto-vernetztes Polyethercarbonat erhältlich durch die Reaktion von Doppelbindungen enthaltenden Polyethercarbonatpolyolen und polyfunktionellen Mercaptanen nach einem Verfahren nach einem der Ansprüche 1-11.

**13.** Mercapto-vernetztes Polyethercarbonat nach Anspruch 12, wobei die Reaktion durch UV-Bestrahlung mit einer Intensität von größer oder gleich 5 $W/cm^2$ und kleiner oder gleich 40 $W/cm^2$ gestartet wird.

**14.** Verwendung Mercapto-vernetzter Polyethercarbonate erhältlich nach einem Verfahren nach einem der Ansprüche 1-11 als Dichtmasse, Klebstoff, Lack oder duromerer Formkörper.

**15.** Formkörper mit einer Schicht umfassend ein Mercapto-vernetztes Polyethercarbonat nach einem der Ansprüche 12-13.

## Claims

**1.** Process for preparing mercapto-crosslinked polyethercarbonates, **characterized in that** polyethercarbonate polyols containing double bonds are reacted with polyfunctional mercaptans and/or sulfur with the involvement of initiator compounds.

**2.** Process according to Claim 1, the preparation of the polyethercarbonate polyols containing double bonds comprising the steps of:

(α) initially introducing a catalyst and

(αα) a suspension medium which contains no H-functional groups
and/or
(αβ) an H-functional starter compound,

(γ) metering in carbon dioxide and

- at least two epoxides, with at least one of the two epoxides having a double bond,
or
- an epoxide and an unsaturated cyclic anhydride.

**3.** Process according to Claim 2, further comprising the following step (β) between step (α) and step (γ):

(β) metering in at least one epoxide, it being possible for the epoxide(s) metered in step (γ) to be the same as or different from the epoxide or epoxides metered in step (β).

**4.** Process according to Claim 2 or 3, the catalyst being a DMC catalyst.

**5.** Process according to any of Claims 2 to 4, the unsaturated cyclic anhydrides metered in step (γ) being selected from the group encompassing 4-cyclohexene-1,2-dioic anhydride, 4-methyl-4-cyclohexene-1,2-dioic anhydride, 5,6-norbornene-2,3-dioic anhydride, allyl-5,6-norbornene-2,3-dioic anhydride, dodecenylsuccinic anhydride, tetradecenylsuccinic anhydride, hexadecenylsuccinic anhydride and/or octadecenylsuccinic anhydride.

**6.** Process according to any of Claims 2 to 5, the unsaturated cyclic anhydrides metered in step (γ) conforming to the following formulae (IX), (X) and (XI) :

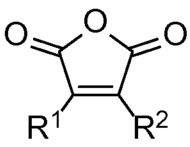
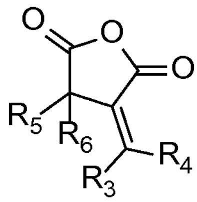
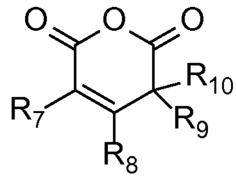
,

(IX) (X) (XI)

where $R^1$-$R^{10}$ independently of one another are hydrogen, halogen, C1-C22 alkyl or C6-C14 aryl radicals. In a further embodiment, $R^1$-$R^2$ may only be hydrogen and $R^3$-$R^{10}$ may be hydrogen, C1-C22 alkyl or C6-C14 aryl radicals.

**7.** Process according to any of Claims 2 to 6, the epoxides with double bonds that are metered in step (γ) being selected from the group encompassing allyl glycidyl ether, vinylcyclohexene oxide, cyclooctadiene monoepoxide, cyclododecatriene monoepoxide, butadiene monoepoxide, isoprene monoepoxide and/or limonene oxide.

**8.** Process according to any of the preceding claims, the polyethercarbonate polyol containing double bonds having a fraction of unsaturated comonomers of greater than or equal to 0.1 mol% and less than or equal to 50 mol%.

**9.** Process according to any of the preceding claims, the polyfunctional mercaptans being selected from the group of the di-, tri- or tetraesters of trimethylolpropane, of trimethylolethane, of glycerol and of pentaerythritol with 3-mercaptopropionic acid and/or 2-mercaptoacetic acid.

**10.** Process according to any of the preceding claims, the initiator compound being selected from the group of the photoinitiators, peroxides, azo compounds, metal-activated peroxides and/or redox initiators.

**11.** Process according to any of the preceding claims, the ratio of double bonds to mercapto groups being greater than or equal to 1:1 and less than or equal to 10:1.

**12.** Mercapto-crosslinked polyethercarbonate obtainable by the reaction of polyethercarbonate polyols containing double bonds and polyfunctional mercaptans by a process according to any of Claims 1-11.

**13.** Mercapto-crosslinked polyethercarbonate according to Claim 12, the reaction being started by UV irradiation with an intensity of greater than or equal to 5 $W/cm^2$ and less than or equal to 40 $W/cm^2$.

**14.** Use of mercapto-crosslinked polyethercarbonates obtainable by a process according to any of Claims 1-11 as sealant, adhesive, coating material, or thermoset molding.

**15.** Molding having a layer comprising a mercapto-crosslinked polyethercarbonate according to either of Claims 12-13.

**Revendications**

**1.** Procédé de fabrication de polyéthercarbonates à réticulation mercapto, **caractérisé en ce que** des polyéthercarbonate-polyols contenant des doubles liaisons sont mis en réaction avec des mercaptans polyfonctionnels et/ou du soufre sous l'effet de composés initiateurs.

**2.** Procédé selon la revendication 1, dans lequel la fabrication des polyéthercarbonate-polyols contenant des doubles liaisons comprend les étapes suivantes :

(α) le chargement d'un catalyseur et

(αα) d'un agent de suspension qui ne contient pas de groupes à fonction H
et/ou
(αβ) d'un composé de départ à fonction H,

(γ) l'ajout de dioxyde de carbone et

- d'au moins deux époxydes, au moins un des deux époxydes comprenant une double liaison,
ou
- d'un époxyde et d'un anhydride cyclique insaturé.

**3.** Procédé selon la revendication 2, comprenant en outre l'étape (β) entre l'étape (α) et l'étape (γ) :

(β) l'ajout d'au moins un époxyde, le ou les époxydes ajoutés à l'étape (γ) pouvant être identiques ou différents de l'époxyde ou des époxydes ajoutés à l'étape (β).

**4.** Procédé selon la revendication 2 ou 3, dans lequel le catalyseur est un catalyseur DMC.

**5.** Procédé selon l'une quelconque des revendications 2 à 4, dans lequel les anhydrides cycliques insaturés ajoutés à l'étape (γ) sont choisis dans le groupe comprenant l'anhydride de l'acide 4-cyclohexène-1,2-dioïque, l'anhydride de l'acide 4-méthyl-4-cyclohexène-1,2-dioïque, l'anhydride de l'acide 5,6-norbornène-2,3-dioïque, l'anhydride de l'acide allyl-5,6-norbornène-2,3-dioïque, l'anhydride de l'acide dodécénylsuccinique, l'anhydride de l'acide tétradécénylsuccinique, l'anhydride de l'acide hexadécénylsuccinique et/ou l'anhydride de l'acide octadécénylsuccinique.

**6.** Procédé selon l'une quelconque des revendications 2 à 5, dans lequel les anhydrides cycliques insaturés ajoutés à l'étape (γ) correspondent aux formules (IX), (X) et (XI) suivantes :

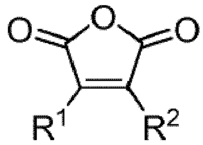
(IX)

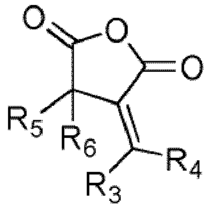
(X)

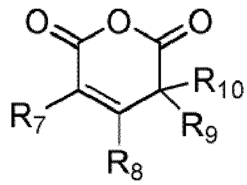
,
(XI)

dans lesquelles $R^1$ à $R^{10}$ représentent indépendamment les uns des autres l'hydrogène, un halogène, des radicaux alkyle en C1-C22 ou aryle en C6-C14 ; ou, selon une autre configuration, $R^1$ à $R^2$ ne peuvent représenter que l'hydrogène, et $R^3$ à $R^{10}$ peuvent représenter l'hydrogène, des radicaux alkyle en C1-C22 ou aryle en C6-C14.

**7.** Procédé selon l'une quelconque des revendications 2 à 6, dans lequel les époxydes contenant une double liaison ajoutés à l'étape (γ) sont choisis dans le groupe comprenant l'éther allylglycidylique, l'oxyde de vinylcyclohexène, le monoépoxyde de cyclooctadiène, le monoépoxyde de cyclododécatriène, le monoépoxyde de butadiène, le monoépoxyde d'isoprène et/ou l'oxyde de limonène.

**8.** Procédé selon l'une quelconque des revendications précédentes, dans lequel le polyéthercarbonate-polyol contenant des doubles liaisons présente une proportion de comonomères insaturés supérieure ou égale à 0,1 % en moles et inférieure ou égale à 50 % en moles.

**9.** Procédé selon l'une quelconque des revendications précédentes, dans lequel les mercaptans polyfonctionnels sont choisis dans le groupe des di-, tri- ou tétraesters de triméthylolpropane, triméthyloléthane, glycérine et pentaérythrite avec de l'acide 3-mercaptopropionique et/ou de l'acide 2-mercaptoacétique.

**10.** Procédé selon l'une quelconque des revendications précédentes, dans lequel le composé initiateur est choisi dans le groupe des photoinitiateurs, des peroxydes, des composés azo, des peroxydes activés par des métaux et/ou des initiateurs redox.

**11.** Procédé selon l'une quelconque des revendications précédentes, dans lequel le rapport entre les doubles liaisons et les groupes mercapto est supérieur ou égal à 1:1 et inférieur ou égal à 10:1.

**12.** Polyéther-carbonate à réticulation mercapto, pouvant être obtenu par la réaction de poléthercarbonate-polyols contenant des doubles liaisons et de mercaptans polyfonctionnels par un procédé selon l'une quelconque des revendications 1 à 11.

13. Polyéthercarbonate à réticulation mercapto selon la revendication 12, dans lequel la réaction est démarrée par un rayonnement UV ayant une intensité supérieure ou égale à 5 W/$cm^2$ et inférieure ou égale à 40 W/$cm^2$.

14. Utilisation de polyéthercarbonates à réticulation mercapto pouvant être obtenus par un procédé selon l'une quelconque des revendications 1 à 11 en tant que matériau d'étanchéité, adhésif, vernis ou corps moulé duromère.

15. Corps moulé contenant une couche qui comprend un polyéthercarbonate à réticulation mercapto selon l'une quelconque des revendications 12 à 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3280078 A
- WO 2012032028 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A


### In der Beschreibung aufgeführte Nicht-Patentliteratur


- **INOUE et al.** Copolymerization of Carbon Dioxide and Alkylenoxide with Organometallic Compounds. *Die Makromolekulare Chemie,* 1969, vol. 130, 210-220
- Polymer Chemistry. *Journal of Polymer Science,* 2006, vol. 44-18, 5329-5336
- *Macromolecules,* 2011, vol. 44, 9882-9886
- *Beispiel Chemical Communications,* 2011, vol. 47, 141-163
- **T. MYERS ; N. KIRK-OTHMER.** Encyclopedia of Chemical Technology. 2005, vol. 14, 274-311
- **J. C.BEVINGTON.** *Makromolekulare Chemie, Macromolecular Symposia,* 1987, vol. 10-1, 89
- **J.P. FOUASSIER ; X. ALLONAS ; J. LALEVEE ; C. DIETLIN.** *Photochemistry and Photophysics of Polymer Materials,* 2010, 351-419
- **C. SMA.** *Angewandte Makromolekulare Chemie,* 1969, vol. 9, 165-181
- **G. S. MISRA.** *U. D. N. Bajpai Progress in Polymer Science,* 1982, vol. 8 (1-2), 61-131